# EUROPÄISCHE PATENTSCHRIFT

(11) **EP 1 472 040 B1**
(45) Veröffentlichungstag und Bekanntmachung des Hinweises auf die Patenterteilung: **07.06.2006**
(21) Anmeldenummer: 03737314.9
(22) Anmeldetag: 05.02.2003
(51) Int. Cl.: B23K 11/11, B23K 11/25, B23K 11/31, F16H 25/20, H02K 7/06

(54) **ANTRIEBSVORRICHTUNG FÜR EINE SCHWEISSZANGE**
DRIVE DEVICE FOR WELDING TONGS
DISPOSITIF D'ENTRAINEMENT D'UNE PINCE DE SOUDAGE

(30) Priorität: 05.02.2002 DE 20201734 U; 21.06.2002 DE 20209668 U
(43) Veröffentlichungstag der Anmeldung: 03.11.2004
(73) Patentinhaber: SWAC Electronic GMBH, CH-6303 Zug (CH)
(72) Erfinder: SCHMITT-WALTER, Stefan, 82041 Oberhaching (DE); HARTMANN, Robert, 81375 München (DE)
(74) Vertreter: Grünecker, Kinkeldey, Stockmair & Schwanhäusser Anwaltssozietät
(86) Internationale Anmeldenummer: PCT/EP2003/001136
(87) Internationale Veröffentlichungsnummer: WO 2003/066269

(56) Entgegenhaltungen:
- EP-A- 0 761 367
- EP-A- 0 830 916
- EP-A- 1 010 491
- EP-A- 1 089 019
- EP-A- 1 138 434
- EP-A- 1 221 351
- WO-A-99/38640
- WO-A-03/024657
- GB-A- 1 075 872
- US-A- 3 402 308
- US-A- 5 321 225
- US-B1- 6 225 590
- PATENT ABSTRACTS OF JAPAN vol. 1996, no. 03, 29. März 1996 (1996-03-29) & JP 07 290251 A (OBARA KK), 7. November 1995 (1995-11-07)

## Beschreibung

Die vorliegende Erfindung betrifft eine Antriebsvorrichtung mit den Merkmalen des Oberbegriffs des Patentanspruchs 1.

In der Regel werden heutzutage in der Industrie, beispielsweise bei der Automobilfertigung, Schweißzangen mit pneumatischer Antriebsvorrichtung zur Erzeugung einer entsprechenden Elektrodenkraft eingesetzt. Durch die pneumatische Antriebsvorrichtung werden insbesondere bei Ausbildung der Schweißzange mit einem Paar von Zangenschenkel oder doppelarmigen Hebeln diese aus ihrer Bereitschaftsstellung in die Schweißstellung bewegt, in der sie auf beispielsweise miteinander zu verschweißende Bleche gegenüberliegend aufdrücken. Bei Erreichen einer entsprechenden Elektrodenkraft wird ein Schweißstrom der Schweißzange zugeführt und das Verschweißen der Bleche findet statt. Anschließend werden die im Folgenden als Hebel bezeichneten Schenkel der Schweißzange in ihre Bereitschaftsstellung zurückbewegt und die Schweißzange beispielsweise mittels eines Roboters zur nächsten Schweißposition bewegt.

Bei Schweißzangen mit pneumatischer Antriebsvorrichtung hat sich herausgestellt, dass die Antriebsvorrichtung zwar relativ unkompliziert und wartungsfreundlich sowie einfach steuer- und überwachbar ist. Allerdings ist bei einer pneumatischen Antriebsvorrichtung die Elektrodenkraft während des Schweißens kaum kontrollierbar. Weiterhin prallen die Schweißelektroden bei Verstellen der Hebel in Schweißstellung auf dem Werkstück auf. Weder während des Verstellens der Hebel von Bereitschaftsstellung in Schweißstellung bzw. umgekehrt noch während des Schweißens ist eine Stellungsabfrage der Hebel mittels der Antriebsvorrichtung möglich. Durch den pneumatischen Betrieb der Antriebsvorrichtung ergibt sich weiterhin ein hoher Lärmpegel und ein hoher Aufwand zur Installation des entsprechenden Pneumatikversorgungssystems. Außerdem entweicht ständig Luft, was zu einer weiteren Lärmbeeinträchtigung führt.

Es ist außerdem zu beachten, dass bei der pneumatischen Antriebsvorrichtung deren Baulänge zwischen den Verstellhebelenden relativ groß ist. Die Baulänge ist allerdings wichtig im Zusammenhang mit dem maximal möglichen Öffnungswinkel der Hebel. Das heißt, bei vorgegebener Baulänge der Antriebsvorrichtung und vorgegebener Hebellänge ergibt sich jeweils der maximale Öffnungswinkel der Hebel in Bereitschaftsstellung, der nur durch Änderung der Baulänge bzw. der Hebellänge veränderbar ist. Die Grösse des maximalen Öffnungswinkel ist wichtig, um die Schweißzange von einer Schweißposition zur anderen ohne Kollision mit dem Werkstück bewegen zu können.

EP-A-1089019 offenbart ein lineares Stellglied, das beispielsweise für eine Schweißzange einsetzbar ist. Es ist nicht genau ausgesagt, in welcher Weise dieses Linearstellglied für die Schweißzange eingesetzt wird. Das Linearstellglied umfasst eine Antriebsvorrichtung mit Stator und Hohlwellenrotor, wobei mit letzterem eine Spindelmutter drehfest verbunden ist. In der Spindelmutter ist eine Spindel in Längsrichtung verstellbar gelagert. Die Verbindung zwischen Spindelmutter und Hohlwellenrotor erfolgt über eine Passfeder.

EP-A-1 221 351 zeigt einen Rotor eines bürstenlosen Servomotors. Eine in Längsrichtung verstellbare Welle ist vorgesehen, die in Eingriff mit einem mit Gewinde versehenen Teil ist. Wird dieses Teil gedreht, wird dessen Drehung über Kugellager auf die Welle übertragen. Dadurch ist diese Welle aus einem entsprechenden Gehäuse ausfahrbar.

EP-A-1 138 434 betrifft einen Antrieb für einen Arm einer Schweißzange. Dieser Antrieb umfasst einen Motor mit Rotor und Stator. Eine Spindelmutter wird mit dem Rotor drehfest verbunden und dient zum Verstellen einer Spindel in Längsrichtung.

Patent Abstracts of Japan, Bd. 1996, Nr. 03, 29.03.1996 (JP 07 290251 A) zeigt einen Servomotor zum Antreiben einer Rotationsmutter, in der eine Spindel in Längsrichtung verstellbar gelagert ist. Mit der Spindel ist zumindest ein Arm einer Schweißzange verbunden. Der Servomotor weist dabei einen Rotor und einen entsprechenden Stator auf, wobei der Rotor mit der Rotationsmutter verbunden ist.

US-A-3 402 308 offenbart einen Linearmotor ohne konkreten Hinweis auf den Einsatz bei einer Schweißzange. Der Motor weist einen Stator und einen Rotor auf. Der Rotor ist mit einer Hohlwelle verbunden. Diese ist mittels von Kugellagern drehbar gelagert und überträgt die Drehung auf eine Rotationsmutter. Durch die Drehung wird eine Spindel in Längsrichtung verstellt. Die Rotationsmutter ist innerhalb der Hohlwelle angeordnet, die mit einem Ende mit der Mutter verschraubt ist. Zwischen dieser Mutter und einem Absatz auf der Hohlwelle ist ein entsprechendes Lager angeordnet. Die Lagereinrichtung ist zwischen einem Ringelement und einem Boden einer Endplatte angeordnet.

US-A-5 321 225 betrifft eine elektrische Betätigungseinrichtung für einen Zangenarm einer Schweißzange. Die elektrische Betätigungseinrichtung umfasst einen Stator und einen Rotor. Der Rotor ist mit einer Rotationsmutter eines Gewindetriebs verbunden, wobei durch Drehung der Rotationsmutter eine entsprechende Spindel in Längsrichtung verstellbar ist. Die Rotationsmutter ist fest mit dem Rotor verbunden und über diesen drehbar gelagert.

Der Erfindung liegt die Aufgabe zugrunde, eine Antriebsvorrichtung der eingangs genannten Art dahingehend zu verbessern, dass in einfacher konstruktiver Weise Belastungen des Gewindetriebs entsprechende Kräfte nicht auf den Motor übertragen werden und gleichzeitig der Gewindetrieb leicht zugänglich ist.

Diese Aufgabe wird durch die Merkmale des Anspruchs 1 gelöst.

Um den Gewindetrieb sicher und vor Verschmutzungen weitestgehend geschützt unterbringen zu können und eine Krafteinleitung ins Gehäuse zu erreichen, wodurch entsprechende Kräfte durch Belastungen des Gewindetriebs nicht auf den Motor übertragen werden, weist die Antriebsvorrichtung ein hülsenförmiges Antriebsgehäuse mit wenigstens teilweise in diesem umlaufenden Halteabsatz auf, wobei die Rotationsmutter am Halteabsatz drehbar, aber axial unverschieblich gelagert ist. Dabei ist zu beachten, dass entsprechend die Umlaufspindel zumindest in ihrer Rückzugsstellung weitestgehend im Antriebsgehäuse angeordnet ist. Der innen im Antriebsgehäuse umlaufende Halteabsatz kann auch als vollständig umlaufender, im Wesentlichen radial nach innen vorstehender Halteabsatz ausgebildet sein.

Durch den elektromotorischen Antrieb ist die Versorgung der Antriebsvorrichtung in einfacher Weise über elektrische Leitungen möglich. Ein aufwendiges Pneumatikversorgungssystem ist nicht notwendig. Weiterhin ermöglicht der elektromotorische Antrieb, dass in einfacher Weise eine Steuerung der Überwachung der Position der Schweißelektroden bzw. der Hebel der Schweißzange möglich ist. Dies kann beispielsweise durch entsprechende Überwachung der relativen Anordnungen von Rotationsmutter und Umlaufspindel erfolgen. Außerdem ist die Elektrodenkraft in einfacher Weise überwachbar oder nachstellbar vor, während und nach Beendigung des Schweißens. Gemäß der Erfindung ist es ebenfalls möglich, beliebige Zwischenstellungen zwischen Schweiß- und Bereitschaftsstellung einzustellen, so dass die Hebel (Schenkel) der Schweißzange bei Anfahren eines weiteren Schweißpunktes nicht unbedingt bis in die Bereitschaftsstellung zurückgeschwenkt werden müssen. Es kann in diesem Zusammenhang ausreichen, wenn die Hebel und damit die Schweißelektroden gerade soweit voneinander entfernt werden, dass ein Bewegen der Schweißzange zum nächsten Schweißpunkt möglich ist.

Der erfindungsgemäße elektromotorische Antrieb mit Gewindetrieb ist äußerst leise, einfach und kostengünstig aufgebaut. Weiterhin ergibt sich eine geringe Baulänge zwischen den Verstellhebelenden, da die Umlaufspindel in ihrer Rückzugsstellung nur in geringem Maße aus der Rotationsmutter vorsteht.

Um auf aufwendige Lagereinrichtungen für die Rotationsmutter zu verzichten, kann diese mit einer integrierten Radial- und Axiallagereinrichtung ausgebildet sein.

Um einen guten mechanischen Wirkungsgrad aufgrund geringer Rollreibung, im Wesentlichen keinen Stick- Slip- Effekt und einen geringen Verschleiß und dadurch bedingt eine hohe Lebensdauer zu erhalten, ist der Gewindetrieb als Kugelgewindetrieb ausgebildet. Ein solcher Kugelgewindetrieb weist weiterhin eine hohe Positionier- und Wiederholgenauigkeit sowie eine hohe Verfahrgeschwindigkeit auf. Es ist natürlich ebenso möglich, dass andere Gewindetriebe verwendet werden, wie ein Trapezgewindetrieb, Planetenrollengewindetrieb oder dergleichen oder auch ein Ritzelzangentrieb oder dergleichen.

Die Erfindung ist bei C-förmigen Schweißzangen, X-förmigen Schweißzangen oder auch anderen Schweißzangen einsetzbar.

Um die Rotationsmutter in einfacher Weise innerhalb des Antriebsgehäuses befestigen zu können, kann ein Lagerring mit dem Halteabsatz drehfest und lösbar verbunden sein, wobei die Rotationsmutter relativ zum Lagering drehbar ist. Der Lagerring kann in diesem Zusammenhang außen auf der Rotationsmutter aufgesetzt und relativ zu dieser beispielsweise mittels entsprechender Kugellager drehbar aber axial unbeweglich gelagert sein. Der Lagerring bildet in diesem Zusammenhang einen Teil der Radial- und Axiallagereinrichtung für die Rotationsmutter, wobei die Lagerung durch Axial-, Schrägkugellager, Rollen-, Nadellager oder dergleichen erfolgen kann, wobei diese Lager auch entsprechend paarweise angeordnet sein können.

Um die Positioniergenauigkeit und Wiederholbarkeit der Verstellung des Gewindetriebes weiterhin zu verbessern, kann die Rotationsmutter zur spielfreien Lagerung vorgespannt sein.

Um einen gut steuerbaren und einfach zu versorgenden elektromotorischen Antrieb zu erhalten, kann dieser ein insbesondere bürstenloser Servomotor sein. Statt eines Servomotors sind auch andere Gleichstrommotore oder dergleichen einsetzbar.

Um eine gute Zugänglichkeit zur Antriebsvorrichtung beispielsweise zu Wartungszwecken zu erhalten, kann das Antriebsgehäuse an seinem dem freien Ausschubende der Umlaufspindel gegenüberliegenden Gehäuseende mit einem Deckel insbesondere lösbar verschlossen sein.

Um auch den elektromotorischen Antrieb zur Reduzierung der Baulänge kompakt gestalten zu können, kann der Servomotor einen innerhalb des Antriebsgehäuses insbesondere drehfest angeordneten Stator und einen in diesem drehbar angeordneten Rotor aufweisen, welcher mit der Rotationsmutter insbesondere kraftschlüssig bewegungsverbunden ist.

Die Baulänge ist weiterhin dadurch reduzierbar, wenn der Rotor als Rotorhülse ausgebildet ist, in welche die Umlaufspindel zumindest in ihrer Rückzugsstellung teilweise eingefahren ist. Das heißt, in Rückzugsstellung der Umlaufspindel umgibt die Rotorhülse diese, so dass der Servomotor einen Teil des Rückzugsraumes der Umlaufspindel bildet.

Eine einfache Bewegungsverbindung zwischen Rotationsmutter und Rotorhülse kann darin gesehen werden, wenn die Rotorhülse an ihrem vom Deckel fortweisenden ersten Ende mit der Rotationsmutter, insbesondere an deren Stirnseite, drehfest verbunden ist.

Um in einfacher und kompakter Weise die Stellung der Rotorhülse bzw. der damit verbundenen Rotationsmutter und damit auch der Umlaufspindel bestimmen zu können, kann der Rotationsmutter und/oder der Rotorhülse ein Positionsgeber zugeordnet sein. Durch diesen ist die jeweilige Drehstellung der Rotorhülse und damit entsprechend die Drehstellung der Rotationsmutter bestimmbar. Ist die Drehstellung der Rotationsmutter bekannt, lässt sich ebenfalls die Verstellung der Umlaufspindel ermitteln.

Um jeweils den Messwert des Positionsgebers direkt mit einer entsprechenden Drehposition von Rotorhülse bzw. Rotationsmutter korrelieren zu können, kann der Positionsgeber ein Absolutwertgeber sein. Ein solcher Absolutwertgeber kann beispielsweise digital-absolut die Position messen. Es sind auch andere Positionsgeber möglich, die eine analoge Messwerterfassung durchführen, wie beispielsweise Resolver oder dergleichen.

Um in einfacher Weise Umlaufspindel und Verstellhebelende des entsprechenden Hebels miteinander verbinden zu können, kann am Ausschubende der Umlaufspindel ein erster Lagerbock als Lagereinrichtung für das Verstellhebelende insbesondere lösbar angeordnet sein.

Um in diesem Zusammenhang die Drehbewegung der Umlaufspindel bei deren Verstellung durch die Rotationsmutter vom Verschwenken des Hebels zu entkoppeln, muss das Auschubende der Umlaufspindel im Lagerbock drehfest gelagert sein.

Um den Gewindetrieb insbesondere beim Ausfahren der Umlaufspindel vor einer Verschmutzung oder einen Werker vor einer möglichen Verletzung durch den Gewindetrieb zu schützen, kann zwischen Lagerbock und im Wesentlichen hiatteabsatz eine die Umlaufspindel umgebende, längenvariable Schutzeinrichtung angeordnet sein. Diese umgibt die Umlaufspindel vollständig und erstreckt sich bis in das Antriebsgehäuse.

Ein einfaches Beispiel für eine solche Schutzeinrichtung kann darin gesehen werden, wenn diese als Faltenbalg ausgebildet ist.

Eine weitere Möglichkeit für eine Schutzeinrichtung ist eine Spiralfederabdeckung. Diese wird durch ein dünnes, aufgewickeltes Blech oder dergleichen gebildet, das spiralförmig auseinanderziehbar ist, wobei ein Ende am Lagerbock und das andere Ende im Wesentlichen am Halteabsatz direkt oder indirekt befestigt ist. Eine solche Spiralfederabdeckung hat beispielsweise als Vorteil, dass sie unempfindlich gegenüber Schweißspritzem ist.

Um den Faltenbalg auf Abstand zur Rotationsmutter zu halten, kann diese an ihrem dem Ausschubende der Umlaufspindel zuweisenden Ende von einer im Wesentlichen hutförmigen Abdeckung umgeben sein, welche abdichtend am Außenumfang der Umlaufspindel anliegt. In diesem Zusammenhang ist zu beachten, dass die hutförmige Abdeckung sich nicht vollständig in Umfangsrichtung um die Rotationsmutter erstrecken muss, sondem beispielsweise auch im Wesentlichen bügelförmig ausgebildet sein kann.

Die Abdeckung kann insbesondere auf einer von Lagerring fortweisenden Seite des Halterabsatzes lösbar an diesem befestigt sein. Außerdem kann der Teil der Abdeckung, der am Außenumfang der Umlaufspindel anliegt, gleichzeitig als Schmiermittelzufuhreinrichtung eingesetzt werden.

Um in entsprechend einfacher Weise an der Antriebsvorrichtung auch das Verstellhebelende des weiteren Hebels lagern zu können, kann der Deckel einen zweiten Lagerbock als Lagereinrichtung zur Lagerung des Verstellhebelendes des weiteren Hebels aufweisen.

Um bei Verstellen der Umlaufspindel in einfacher Weise ein entsprechendes Verschwenken der Hebel zu ermöglichen, kann jeder Lagerbock eine sich im Wesentlichen senkrecht zur Längsachse der Umlaufspindel laufende Querbohrung aufweisen, in der eine mit dem entsprechenden Verstellhebelende insbesondere lösbar verbundene Welle verdrehbar gelagert ist. Eine verdrehbare Lagerung kann in diesem Zusammenhang durch eine Reihe von Lagern, wie Schulterlager, Kreuzrollenlager, radiale Kugellager oder dergleichen erfolgen. Diese können auch zu mehreren angeordnet sein.

Um die Welle mit hoher Tragfähigkeit und zur Aufnahme auch axialer Kräfte zu lagern, können auf der Welle zumindest zwei Kegelrollenlager oder Schulterlager in spiegelbildlicher Anordnung aufgesetzt sein.

Um in diesem Zusammenhang eine weitestgehend spielfreie Lagerung der Verstellhebelenden zu ermöglichen, kann jedes Kegelrollenlager insbesondere mittels eines Gewinderinges axial vorgespannt sein.

Eine einfache Möglichkeit einer solchen Einspannung kann dadurch realisiert werden, wenn innerhalb der Querbohrung und/oder an der Welle gegenüberliegende Anlageabsätze für die Kegelrollenlager angeordnet sind.

Um die Verstellhebelenden in einfacher Weise an den entsprechenden Lagerungen bzw. Lagerböcken befestigen zu können, können beidseitig zur Querbohrung an der Welle insbesondere lösbar befestigte Einsteckkappen angeordnet sein. Diese können insbesondere konische Aufsteckbohrungen aufweisen Diese Einsteckkappen dienen zur Befestigung der Verstellhebelenden am Lagerbock. Insbesondere können die Verstellhebelenden gabelförmig ausgebildet sein, so dass eine Befestigung der Gabelenden beidseitig zur Querbohrung durch die Einsteckkappen erfolgen kann.

Die konischen Aufsteckbohrungen dienen insbesondere dazu, dass entsprechende Wellenenden der in der Querbohrung angeordneten Welle von ihnen aufgenommen werden, wobei die konische Ausbildung der Aufsteckbohrung zwar einen festen Sitz der Welle gewährleistet, gleichzeitig aber auch ein einfaches Lösen der Einsteckkappen ermöglicht.

Um bei Befestigung der Einsteckkappen die Kegelrollenlager einzuspannen, kann wenigstens ein auf die Welle aufschraubbarer Zwischenring als seitliche, verstellbare Aniageftäche für ein Kegelrollenlager vorhanden sein. Das heißt, das beispielsweise ein Kegelrollenlager durch die entsprechenden, oben genannten Anlageabsätze eingespannt ist, während das zweite, dazu spiegelbildliche Kegelrollenlager erst durch Befestigung der entsprechenden Einsteckkappe und insbesondere durch die seitliche Anlagefläche des aufgeschraubten Zwischenringes eingespannt wird.

Zur Sicherung des Zwischenrings in seiner aufgeschraubten Stellung kann zwischen Einsteckkappe und Zwischenring ein Sicherungsblech angeordnet ist.

Es besteht die Möglichkeit, dass die Einsteckkappe in ihrer Axialrichtung zumindest an einer Stelle einen Querschnitt aufweist, auf den ein entsprechendes Verstellhebelende formschlüssig aufsteckbar ist. Ein Beispiel für einen solchen Querschnitt ist ein eckiger Querschnitt, wie viereckig, fünfeckig oder sechseckig. Um die Verbindung zwischen Einsteckkappe und Welle zu verbessern, kann die Einsteckkappe wenigstens eine Anschraubbohrung zur Befestigung an der Welle aufweisen.

Um ein Herabgleiten des Verstellhebelendes zusätzlich zu verhindern, kann die Einsteckkappe an ihrem von der Welle fortweisendern Ende einen im Wesentlichen radial nach außen abstehenden Anlageflansch aufweisen. Das heißt, zwischen Anlageflansch und seitlichen Öffnungen der Querbohrung ist das Verstellhebelende bzw. dessen Gabelenden angeordnet.

Um eine höhere Strombelastung der Antriebsvorrichtung zu ermöglichen, können Kühlrippen außen am Antriebsgehäuse angeordnet sein.

Beim Ein- und Ausfahren der Umlaufspindel und entsprechender Betätigung der Schweißzange können Kippmomente im Bereich der Antriebsvorrichtung auftreten. Um diese nicht auf den Gewindetrieb zu übertragen, können wenigstens zwei Führungsstangen im Wesentlichen parallel zur Längsachse der Umlaufspindel angeordnet sein, welche Führungsstangen zumindest an ihren Enden mit dem Antriebsgehäuse und/oder der Lagereinrichtung befestigt sind.

Um die erfindungsgemäße Antriebsvorrichtung in diesem Zusammenhang weiterhin kompakt auszubilden und die Kippmomente gut aufnehmen zu können, kann jede Führungsstange in einer Längsbohrung innerhalb des Antriebsgehäuses geführt sein. An ihren Enden ist die Führungsstange in der Längsbohrung beispielsweise durch aufgeschraubte Muttern oder dergleichen verspannt.

Um die Kippmomente gut aufnehmen zu können, können die Längsbohrungen im Wesentlichen in Verlängerung der Verstellhebelenden angeordnet sein. Sind die Verstellhebelenden gabelfönnig ausgebildet, so kann in Verlängerung jeder Gabel eine entsprechende Längsbohrung mit Führungsstange angeordnet sein.

Erfindungsgemäß ergibt sich durch die vorangehenden Merkmale, dass die Antriebsvorrichtung äußerst kompakt und als weitgehend integrierte Einheit mit Gewindetrieb, elektromotorischen Antrieb und Lagereinrichtung für die Verstellhebelenden ausgebildet ist.

Um bei einer solchen kompakten Einheit ausreichend Schmiermittel allen beweglichen Teilen zuführen zu können, kann vorteilhafter Weise ein entsprechendes Schmiermittelverteilungssystem mit wenigstens einem Schmiermittelzufuhrkanal innerhalb des Antriebsgehäuses und/oder der Lagereinrichtung integriert sein. In diesem Zusammenhang besteht ebenfalls die Möglichkeit, dass ein Schmiermittelverteilungssystem sowohl für alle beweglichen Teile innerhalb des Antriebsgehäuses als auch innerhalb der Lagereinrichtung, siehe die Beschreibung der Lagerböcke mit Querbohrung, Welle und Kegelrollenlager, vorgesehen ist.

Bei einem anderen Ausführungsbeispiel der Erfindung kann die Umlaufspindel in einer Spindelhülse angeordnet sein, welche mit der Rotationsmutter drehverbunden ist. Durch die Spindelhülse ist die Umlaufspindel geschützt und in dieser zwischen ihrer Ausschubstellung und ihrer Rückzugsstellung längs verstellbar.

Um bei den vorangehenden Ausführungsbeispielen den Rotor in einfacher Weise lagern zu können, kann der Rotor außen auf der Spindelhülse angeordnet sein. Der Stator ist entsprechend dem Antriebsgehäuse zugeordnet, so dass der Rotor zusammen mit der Spindelhülse und der Rotationsmutter drehbar ist.

Um die Spindelhülse an ihrem der Rotationsmutter gegenüberliegenden Ende abzuschließen, kann eine Drehkappe an diesem Ende der Spindelhülse insbesondere lösbar befestigt sein. Durch die lösbare Befestigung ergibt sich eine erleichterte Zugänglichkeit zum Inneren der Drehhülse und damit beispielsweise zur Umlaufspindel.

Um die Spindelhülse und damit auch die Rotationsmutter gegenüber dem Antriebsgehäuse in einfacher Weise drehbar lagern zu können, kann wenigstens eine Lagereinrichtung zwischen Spindelhülse und Antriebsgehäuse angeordnet sein. Ein Beispiel für eine solche Lagereinrichtung sind Kugel- oder Rollenlager, wobei zweireihige Lager, wie beispielsweise zweireihige Schulterkugellager oder dergleichen, weitere Vorteile haben.

Um die Spindelhülse in Längsrichtung bezüglich der Lagereinrichtung zu fixieren, kann die Lagereinrichtung zwischen einem radial nach außen vorstehenden Stufenabschnitt der Spindelhülse und einem Zwischenring angeordnet sein. Der Zwischenring kann auf der Außenseite der Spindelhülse aufschraubbar oder in anderer Weise lösbar befestigt sein.

Um die Spindelhülse auch im Bereich ihres Stufenabschnitts benachbart zur Rotationsmutter zu lagern, kann dem Stufenabschnitt der Spindelhülse ein insbesondere aufschraubbarer Befestigungsring zugeordnet sein. Dieser Befestigungsring ist beispielsweise im Inneren des Antriebsgehäuses, insbesondere an einem von diesem radial nach innen vorstehenden Halteabsatz befestigt. Die Befestigung kann über Schrauben oder andere Einrichtungen erfolgen.

Um beim Ein- und Ausfahren der Umlaufspindel die Schutzeinrichtung zu be- und entsprechend zu entlüften, kann der Schutzeinrichtung eine Be-/Entlüftungseinrichtung zugeordnet sein. Diese umfassen beispielsweise im Deckel angeordnete, luftdurchlässige, poröse Teile aus Kunststoff oder Metall, die über entsprechende Leitungen mit einem inneren der Schutzeinrichtung in Verbindung stehen. Über diese Leitungen und die im Wesentlichen als Luftaustauschdämpfer wirkenden porösen Teile erfolgt ein Luftaustausch, so dass bei jedem Ausfahren der Schutzeinrichtung Frischluft (kühl) in die Antriebsvorrichtung oder Stelleinrichtung zur Kühlung eingesaugt und bei jedem Einfahren als erwärmte Abluft wieder abgegeben wird.

Die Erfindung betrifft weiterhin eine Schweißzange mit wenigstens zwei relativ zueinander bewegbaren und an ihren Schweißenden mit Elektrode beziehungsweise Gegenelektrode versehenen Zangenschenkeln, die als doppelarmige Hebel ausgebildet sein können, und einer den Schweißenden gegenüberliegenden Betätigungsenden der Zangenschenkeln zugeordneten Antriebsvorrichtung, wobei zwischen wenigstens einem Zangenschenkel oder Hebel und einem Fixpunkt eine lösbare Arretiereinrichtung zur Festlegung zumindest einer Arretierstellung dieses Zangenschenkels angeordnet ist. Die Antriebsvorrichtung ist dabei die im Vorangehenden beschriebene Antriebsvorrichtung.

Eine solche Schweißzange ist an sich aus der DE 195 34 845 C1 bekannt. Die vorbekannte Schweißzange ist als sogenannte Scherenschweißzange mit zwei Zangenschenkeln ausgebildet. Die Zangenschenkel sind mittels einer Gelenkverbindung relativ zueinander verschwenkbar. Die Gelenkverbindung an sich und damit die Schweißzange ist über einen Schwenkbolzen verschwenkbar.

An ihren Schweißenden sind die entsprechenden Zangenschenkel mit einer Elektrode beziehungsweise einer Gegenelektrode versehen. Mittels dieser Elektroden werden entsprechende Blechteile von insbesondere räumlich gestalteten Körpern verschweißt, wobei die Schweißzange in der Regel an einem programmgesteuerten Roboter oder der gleichen angebracht ist. Zur relativen Bewegung der Zangenschenkel ist den Schweißenden gegenüberliegenden Betätigungsenden der Zangenschenkel eine Antriebseinrichtung zugeordnet. Diese ist bei der aus der DE 195 34 845 C1 bekannten Schweißzange pneumatisch oder hydraulisch betätigbar, allerdings nicht mit der erfindungsgemäßen Antriebsvorrichtung vergleichbar.

Zwischen einem an einer Basisplatte der Schweißzange vorgesehenen Fixpunkt und zumindest einem Zangenschenkel ist weiterhin eine lösbare Arretiereinrichtung angeordnet. Durch diese ist zumindest eine Arretierstellung des entsprechenden Zangenschenkels festlegbar. Die Arretiereinrichtung ist als doppelwirkender Stell-Zylinder mit Kolben ausgebildet und kann pneumatisch oder hydraulisch betätigt werden.

Nachteilig bei dieser vorbekannten Schweißzange ist, dass die Arretiereinrichtung durch die hydraulisch oder pneumatische Betätigung im Wesentlichen einen Zangenschenkel nur in einer bestimmten Arretierstellung festlegen kann. Das heißt, der entsprechende: Zangenschenkel ist entweder fixiert oder schwenkbar. Eine Variation der Arretierstellung oder auswählbare Arretierstellungen sind nicht möglich. Weiterhin fehlt die Möglichkeit die einmal ausgewählte Arretierstellung gegebenenfalls geringfügig zu verändern, falls dies vor, während oder nach der Schweißtätigkeit der Schweißzange notwendig ist.

Um in einfacher Weise eine genaue und variierbare Einstellung unterschiedlicher Arretierstellungen auch reproduzierbar zu ermöglichen, ist die Arretiereinrichtung eine elektrisch betriebene Stelleinrichtung mit variabler Einstellung der Arretierstellung. Durch diese Auswahl der Stelleinrichtung sind in einfacher Weise unterschiedliche Arretierstetlungen durch entsprechende elektrische Betätigungen der Stelleinrichtung anfahrbar. Außerdem können einmal eingenommene Arretierstellungen in einfacher Weise auch nur minimal verändert werden, falls dies erforderlich ist. Durch den elektrischen Betrieb der Stelleinrichtung ist diese in einfacher Weise gut reproduzierbar und exakt zur Einstellung einer entsprechenden Arretierstellung ansteuerbar. Durch die Befestigung an nur einem Fixpunkt ergibt sich außerdem eine relativ gute Unabhängigkeit von eventuellen Wärmeausdehnungen der Schweißzange.

Außerdem ist durch den elektrischen Betrieb der Stelleinrichtung beispielsweise ein aufwendiges Pneumatik- oder Hydraulikversorgungssystem nicht mehr notwendig.

Ein einfaches Ausführungsbeispiel einer solchen elektrisch betriebenen Stelleinrichtung kann darin gesehen werden, dass sie als Antriebsvorrichtung, wie vorangehend beschrieben, ausgebildet ist.

Erfindungsgemäß kann durch die Stelleinrichtung insbesondere vor und/oder nach einer Schweißung ein Zangenausgleich durchgeführt werden. Das heißt, vor oder nach der Schweißung wird ein entsprechender fixierter Zangenschenkel um das Maß eines Zangenausgleichs verschwenkt.

Es wäre möglich, dass die Antriebsvorrichtung pneumatisch oder hydraulisch betrieben wird. Allerdings kann der gesamte Aufbau der Antriebsvorrichtung dadurch weiterhin vereinfacht werden, wenn diese in gleicher Weise einen elektrisch angetriebenen Gewindetrieb mit Rotationsmutter und zwischen Ausschub- und Rückzugsstellung axial verstellbarer Drehspindel aufweisen, welche Drehspindel mit ihrem freien Ausschubende mit einem Verstellende eines Zangenschenkels bewegungsverbunden ist. Dadurch ergibt sich eine geringere Baulänge der Schweißzange. Die Antriebsvorrichtung ist zum Betätigen und/oder Arretieren der Schweißzange, das heißt zum Verschwenken der Zangenschenkel, im Wesentlichen kontinuierlich steuerbar und überwachbar und der gesamte Aufbau wird vereinfacht, so dass die Schweißzange relativ kostengünstig und wartungsfreundlich ist. Außerdem ist beispielsweise im Vergleich zu pneumatisch oder hydraulisch betätigten Antriebsvorrichtungen noch beachtlich, dass gleichzeitig die Lärmbelastung bei elektrisch betriebener Antriebsvorrichtung in hohem Maße reduziert ist.

Es besteht die Möglichkeit, dass Antriebsvorrichtung und Stelleinrichtung separate und an unterschiedlichen Stellen der Schweißzange angeordnete Einrichtungen sind. Beispielsweise kann sich die Antriebsvorrichtung als ersten Antrieb zwischen den Stellenden der Zangenschenkel erstrecken, während die Stelleinrichtung als zweiter Antrieb mit einem Zangenschenkel beabstandet zu dessen Verstellende bewegungsverbunden ist. Auf diese Weise sind Antriebsvorrichtung und Stelleinrichtung getrennt und unabhängig voneinander betätig- und steuerbar.

Um allerdings den Aufbau der Schweißzange weiterhin zu vereinfachen, können Antriebsvorrichtung und Stelleinrichtung in einer elektrisch betätigbaren Verstelleinrichtung integriert sein, welche zwei insbesondere unabhängig voneinander bewegbare Verstellelemente aufweist, von denen jeweils eins mit einem Verstellende eines Zangenschenkels bewegungsverbunden ist. Dadurch, dass die Verstellelemente jeweils für sich bewegbar sind, ist einerseits ein Verstellen beziehungsweise Verschwenken der Zangenschenkel möglich und andererseits ebenfalls ein Zangenschenkel in einer auswählbaren Arretierstellung anordbar.

Ein bevorzugtes Ausführungsbeispiel einer solchen Verstelleinrichtung kann darin gesehen werden, wenn die Verstelleinrichtung zwei Gewindetriebe aufweist, wobei durch jeden der Gewindetriebe ein entsprechendes Verstellelement in axialer Richtung einer Drehspindel des jeweiligen Gewindetriebs bewegbar ist. Die Gewindetriebe können unterschiedlich elektrisch angesteuert werden, so dass die Zangenschenkel unabhängig voneinander verstellbar sind und auch beispielsweise ein Zangenschenkel in einer bestimmten Arretierstellung festgelegt ist, während der andere Zangenschenkel noch weiter bewegbar ist.

Wenn die Zangenschenkel in der vorangehend beschriebenen Weise unabhängig voneinander bewegbar sind, kann es weiterhin als günstig betrachtet werden, wenn jeder Zangenschenkel ohne gelenkige Verbindung der Zangenschenkel miteinander von jeweils einem Verstellelement bewegbar und in gegebenenfalls ausgewählter Arretierstellung fixierbar ist. Das heißt beispielsweise, dass jeder Zangenschenkel für sich in axialer Richtung der zugehörigen Umlauf- oder Drehspindel verstellbar ist und auch jeder Zangenschenkel für sich bei Anfahren einer Schweißposition zum Umfahren von Hindernissen verstellbar ist. Dadurch ist es beispielsweise möglich, schneller zwischen verschiedenen Schweißpositionen mittels eines programmgesteuerten Roboters zu verfahren. Außerdem ist es auf diese Weise vereinfacht möglich, Anpressdruck zum Verschweißen, Druck während des Verschweißens oder dergleichen zu überwachen und ein gegebenenfalls erforderliches Nachstellen der entsprechenden Zangenschenkel insbesondere während des Schweißvorgangs in einfacher Weise kontrolliert durchzuführen.

Es besteht die Möglichkeit, dass die für jeden Zangenschenkel vorgesehenen Gewindetriebe unterschiedlich aufgebaut sind, was sich beispielsweise durch unterschiedliche Gewindesteigungen der Drehspindeln ergeben könnte. Durch solch unterschiedlich aufgebaute Gewindetriebe, sind die Zangenschenkel beispielsweise unterschiedlich schnell bei gleicher Umdrehungszahl der Drehspindeln bewegbar. Um allerdings die Schweißzange hinsichtlich Aufbau, Ersatzteilbevorratung usw. zu vereinfachen, können die Gewindetriebe gleichartig aufgebaut sein. Dadurch ist beispielsweise für beide Gewindetriebe eine gleiche Drehspindel, eine gleiche Rotationsmutter und dergleichen einsetzbar.

Erfindungsgemäß besteht ebenso die Möglichkeit, dass die Verstellelemente der Verstelleinrichtung nicht vollständig unabhängig voneinander bewegbar sind, sondern beispielsweise sich nur mit unterschiedlichen Geschwindigkeiten bewegen können. Dies ist dadurch erreichbar, dass die Verstelleinrichtung eine Drehspindel mit wenigstens zwei unterschiedlichen Drehspindelabschnitten aufweist, wobei jedem Drehspindelabschnitt ein Verstellelement zugeordnet ist. Diese unterschiedlichen Drehspindelabschnitte können sich beispielsweise durch unterschiedliche Gewindesteigungen auszeichnen, wobei die Gewinde in dem jeweiligen Drehspindelabschnitt unterschiedliche Drehsinne aufweisen. Es besteht ebenfalls die Möglichkeit, dass die Gewindesteigung in den Drehspindelabschnitten gleich ist und nur der Drehsinn des Gewindes entgegengesetzt ist.

Um in diesem Zusammenhang auch bei der Verstelleinrichtung genau feststellen zu können, in welcher Position der entsprechende Zangenschenkel angeordnet ist, kann jedem Verstellelement ein Positionssensor zugeordnet sein.

Es besteht ebenfalls die Möglichkeit, dass die elektrisch betriebene Stelleinrichtung ein elektrischer Linearantrieb mit beispielsweise Reaktionsschiene und Primärteil ist.

An dieser Stelle sei noch darauf hingewiesen, dass insbesondere in der Automobilindustrie im Zusammenhang mit Verschraubung, Verschweißung oder dergleichen für jede Verschraubungs- oder Verschweißungsstelle entsprechende Qualitätsmessungen vorgenommen und für eine längere Zeit aufgezeichnet werden. Erfindungsgemäß ist es möglich, über die verschiedenen Schweißpunkte Qualitätsaussagen zu treffen, da es beispielsweise möglich ist, zu jedem Schweißpunkt die Elektrodenkraft, Änderungen der Elektrodenkraft während des Schweißvorgangs usw. zu messen und aufzuzeichnen. Die Elektrodenkraft ist direkt durch den Motorstrom des Servomotors oder auch durch weitere Kraftmesseinrichtungen, wie Dehnungsmessstreifen, Druckmessdosen oder dergleichen im Bereich der Antriebsvorrichtung messbar. In gleicher Weise kann eine Änderung der Elektrodenkraft während des Verschweißens gemessen und überwacht werden. Außerdem ist es erfindungsgemäß in einfacher Weise möglich, äußerst genau die Schweißelektroden zu positionieren und beispielsweise zur Aufrechterhaltung einer bestimmten Elektrodenkraft nachzuführen.

Für solche Qualitätsaussagen über die verschiedenen Schweißpunkte ist es allerdings auch erforderlich, dass die Lagereinrichtung zwischen Verstellhebelenden und Antriebseinrichtung spielfrei sind. Dies wird durch die vorangehend beschriebenen Lageeinrichtung mit Lagerböcken, Querbohrungen, Wellen, Kegelrollenlagern, Anlageabsätzen, Einsteckkappen, Zwischenring und Sicherungsblech ermöglicht.

Eine solche spielfreie Lagereinrichtung zwischen Verstellhebelenden und Antriebseinrichtung ist selbstverständlich auch bei anderen Antriebseinrichtungen als der vorangehend beschriebenen einsetzbar. Dabei sollte die entsprechende Lagereinrichtung zumindest zwischen einem Ende der Antriebseinrichtung für eine Schweißzange und einem dieser zugeordneten Verstellhebelende wenigstens eines Hebels der Schweißzange angeordnet sein.

Im Folgenden wird ein vorteilhaftes Ausführungsbeispiel der Erfindung anhand der in der Zeichnung beigefügten Figuren erläutert.

Es zeigen:
- Figur 1: eine Prinzipdarstellung einer erfindungsgemäßen Antriebsvorrichtung für eine Schweißzange mit Steuerung;
- Figur 2: einen Längsschnitt durch die erfindungsgemäße Antriebsvorrichtung nach Figur 1;
- Figur 3: einen gegenüber dem Längsschnitt nach Figur 2 um 90° verdrehten Längsschnitt durch die erfindungsgemäße Antriebsvorrichtung;
- Figur 4: eine Draufsicht auf die Antriebsvorrichtung nach Figur 1;
- Figur 5: eine Unteransicht der Antriebsvorrichtung nach Figur 1;
- Figur 6: einen Längsschnitt durch ein weiteres Ausführungsbeispiel der erfindungsgemäßen Antriebsvorrichtung nach Figur 1, und
- Figur 7: eine Seitenansicht von in einer Verstelleinrichtung integrierter Antriebsvorrichtung und Stelleinrichtung.

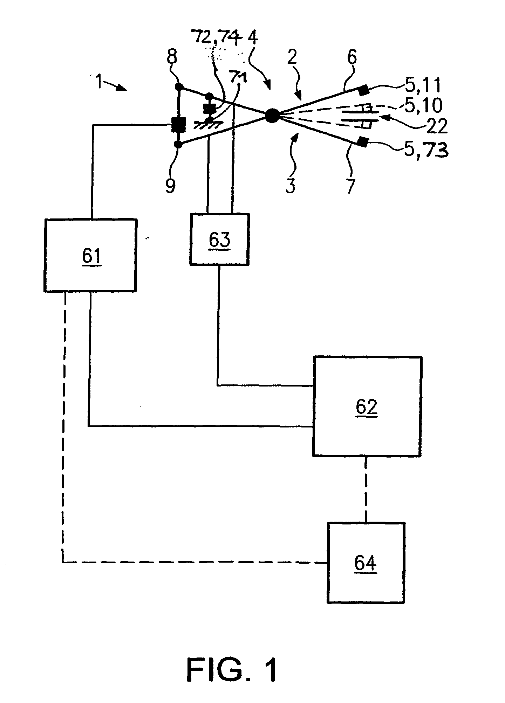

In Figur 1 ist eine Prinzipdarstellung der erfindungsgemäßen Antriebsvorrichtung 1 für eine Schweißzange 4 mit entsprechender Steuerung dargestellt. Die Schweißzange 4 weist zwei doppelarmige Hebel 2,3 auf. An einem als Schweißhebelende 6,7 bezeichneten Ende eines jeden Hebels sind entsprechende Schweißelektroden 5 angeordnet. Zwischen den den Schweißhebelenden 6,7 gegenüberliegenden Verstellhebelenden 8,9 ist die erfindungsgemäße Antriebsvorrichtung 1 angeordnet.

Die Hebel 2,3 sind in Figur 1 in ihrer durchgezogenen Darstellung, in ihrer Bereitschaftsstellung 11 und in der gestrichelten Darstellung in ihrer Schweißstellung 10. In der Schweißstellung 10 wird eine Elektrodenkraft über die Schweißelektroden 5 auf ein Werkstück 22 ausgeübt, um beispielsweise zwei das Werkstück 22 bildende Bleche zum nachfolgenden Verschweißen aneinander zu drücken.

Die beiden Hebel 2,3 der Schweißzange 4 sind mit einer Schweißsteuerung 63 verbunden. Diese führt entsprechend Strom den Hebeln und damit den Schweißelektroden 5 während des Schweißvorgangs zu. Die Antriebsvorrichtung 1 ist mit einer Motorsteuerung 61 verbunden. Durch diese wird die Antriebsvorrichtung 1 zum Verschwenken der Hebel 2,3 zwischen Schweißstellung 10 und Bereitschaftsstellung 11 gesteuert.

Es sei an dieser Stelle angemerkt, dass durch die erfindungsgemäße Antriebsvorrichtung auch jede Zwischenstellung zwischen Schweiß- und Bereitschaftsstellung genau einstellbar ist.

Um die Schweißzange insgesamt steuern zu können, sind Motorsteuerung 61 und Schweißsteuerung 63 mit einer Schweißzangensteuerung 62 verbunden.

Um weiterhin eine Qualitätsaussage bezüglich jedes Schweißpunktes geben zu können, ist eine Qualitätsüberwachungseinrichtung 64 vorgesehen, die sowohl mit der Schweißzangensteuerung 62 als auch der Motorsteuerung 61 zum Datenaustausch verbunden ist. Mittels der Qualitätsüberwachungseinrichtung 64 besteht die Möglichkeit, für jeden Schweißpunkt die Elektrodenkraft, die Stellung der Schweißelektroden bzw. der Antriebsvorrichtung sowie den Schweißstrom und gegebenenfalls Änderungen dieser Parameter vor, während und nach dem Schweißvorgang zu überwachen und aufzuzeichnen. Es besteht ebenfalls die Möglichkeit, über die Schweißzangensteuerung 62 die Motorsteuerung 61 zu betätigen, um beispielsweise die Hebel der Schweißzange 4 in gewünschter Weise nachzusteuern, oder eine Verschweißung mit angestrebter Qualität festzustellen.

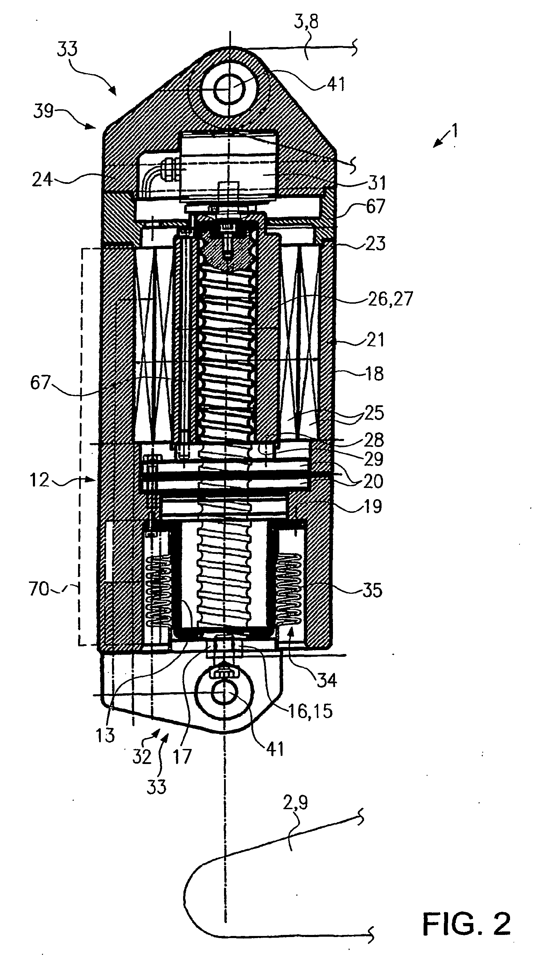

In Figur 2 ist ein Längsschnitt durch die Antriebsvorrichtung 1 nach Figur 1 dargestellt. Zur Vereinfachung sind entsprechende Verstellhebelenden 8,9 der Hebel 2,3 nicht oder nur im Prinzip dargestellt.

Die Antriebsvorrichtung 1 weist ein hülsenförmiges Antriebsgehäuse 18 auf. Dieses ist an einem Gehäuseende 23 durch einen Deckel 24 verschließbar. Innerhalb des Antriebsgehäuses 18 ist, teilweise auch innerhalb des Deckels 24, ein Absolutwertgeber 31 angeordnet. Entsprechende Versorgungsleitungen des Absolutwertgebers sind nur teilweise wie auch deren Weiterleitungen außerhalb des Antriebsgehäuses 18 zur Vereinfachung nicht dargestellt. Der Absolutwertgeber 31 dient zur Messung der Position einer Rotationsmutter 13, die Teil eines Kugelgewindetriebes 12 ist. Die Rotationsmutter 13 ist an einem radial innerhalb des Antriebsgehäuses 18 nach innen vorstehenden Halteabsatzes 19 drehbar gelagert. Die drehbare Lagerung erfolgt über einen Lagerring 20 als Radial- und Axiallagereinrichtung, der auf einer dem Deckel 24 zuweisenden Seite des Halteabsatzes 19 beispielsweise durch Verschrauben lösbar befestigt ist. In dem Lagerring 20 ist die Rotationsmutter 13 drehbar aber axial unverschiebbar gelagert.

An ihrer dem Deckel 24 zuweisenden Stirnseite 29 ist die Rotationsmutter 13 mit einem ersten Ende 28 einer als Rotor 26 ausgebildeten Rotorhülse 27 des Servomotors 21 lösbar verbunden. Die Verbindung erfolgt über eine Anzahl von Schrauben 67, von denen in Figur 2 zumindest eine dargestellt ist.

An ihrem dem ersten Ende 28 gegenüberliegenden zweiten Ende 30 ist die Rotorhülse 27 mit dem Absolutwertgeber 31 bewegungsverbunden.

Direkt benachbart zum Absolutwertgeber 31 ist eine Abdeckung 67 innerhalb der Rotorhülse 27 angeordnet. Durch diese ist die Rotorhülse 27 teilweise und insbesondere mit ihrem zweiten Ende 30 hinduchgeführt.

Um die Rotorhülse 27 ist innerhalb des Antriebsgehäuses 28 der Stator 25 des Servomotors 21 angeordnet. Insbesondere ist der Servomotor als bürstenloser Motor ausgebildet.

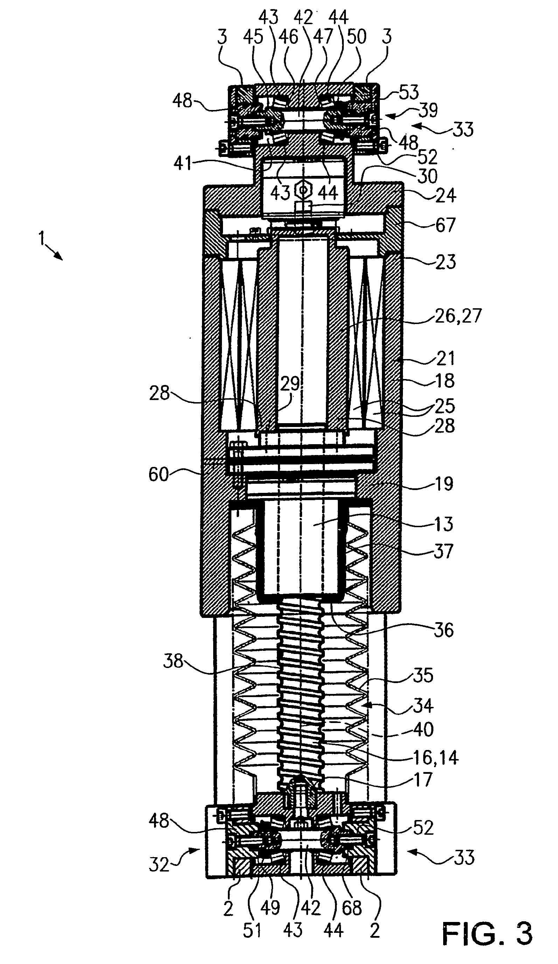

Als weiterer Teil des Kugelgewindetriebs 12 ist in der Rotationsmutter 13 eine Umlaufspindel 16 zwischen Rückzugsstellung 15, siehe Figur 2, und Ausschubstellung 14, siehe Figur 3, verstellbar gelagert. In ihrer Rückzugsstellung 15 ist die Umlaufspindel 16 im Wesentlichen vollständig innerhalb des Antriebsgehäuses 18 angeordnet. Ihr Ausschubende 17 steht noch aus der Rotationsmutter 13 vor, während der übrige Teil der Umlaufspindel 16 sich in der Rotationsmutter 13 bzw. innerhalb der Rotorhülse 27 befindet. Das dem Ausschubende 17 der Umlaufspindel 16 gegenüberliegende Ende ist in ihrer Rückzugsstellung 15 im Bereich der Abdeckung 67 angeordnet.

Das Ausschubende 17 der Umlaufspindel 16 ist mit einem ersten Lagerbock 32 einer Lagereinrichtung 33 verbunden, siehe auch Figur 3. Innerhalb des ersten Lagerbocks 32 ist das Ausschubende 17 drehfest gelagert.

Zwischen erstem Lagerbock 32 und Halteabsatz 19 ist die Umlaufspindel 16 von einer längenveränderlichen Schutzeinrichtung 34 umgeben. Diese ist als an seinen Enden mit dem Lagerbock 32 bzw. einer Abdeckung 37 verbundener Faltenbalg 35 oder auch als Spiralfederabdeckung ausgebildet. Die Abdeckung 37 überdeckt hutartig die Rotationsmutter 13 an ihrem dem Halteabsatz 19 fortweisenden Ende 36. Dabei liegt die Abdeckung am Außenumfang 38 der Umlaufspindel 16 benachbart zum Ende 36 der Rotationsmutter an. Die Abdeckung 37 ist im Bereich des Halteabsatzes 19 auf dessen dem Lagerring abweisenden Seite beispielsweise durch Verschrauben befestigt.

Gegenüberliegend zum ersten Lagerbock 32 ist im Deckel 24 ein zweiter Lagerbock 39 enthalten. Die beiden Lagerböcke sind als Teil der Lagereinrichtung 33 im Wesentlichen gleichartig zur verdrehbaren Lagerung der Verstellhebelenden 8,9 aufgebaut, siehe hierzu insbesondere Figur 3.

In jedem Lagerbock 32,39 ist eine Querbohrung 41 angeordnet. Diese erstreckt sich senkrecht zur Längsachse 40 der Umlaufspindel 16. Innerhalb der Querbohrung 41 ist eine Welle 42 drehbar gelagert. Die drehbare Lagerung erfolgt über eine spiegelbildliche Anordnung von zwei Kegelrollenlagern 43,44. Um die Kegelrollenlager 43,44 innerhalb der Querbohrung 41 zu fixieren und gegebenenfalls zu verspannen, sind entsprechende Anlageabsätze 45,46 und 47 im Innenumfang der Querbohrung 41 bzw. am Außenumfang der Welle 42 vorgesehen.

Es sei noch angemerkt, dass die Anordnung der entsprechenden Anlageabsätze im ersten und zweiten Lagerbock 32,39 in umgekehrter Weise erfolgen kann, so dass im ersten Lagerbock 32 die Ver- oder Vorspannung der beiden Kegelrollenlager 43,44 in Figur 3 von rechts und im zweiten Lagerbock 39 über eine in Figur 3 von links erfolgt.

Im ersten Lagerbock 32 ist das Kegelrollenlager 43 zwischen den Anlageabsätzen 45 und 46 an Welle 42 bzw. Querbohrung 41 fixiert. Das andere Kegelrollenlager 44 ist zwischen einem weiteren Anlageabsatz 47 an der Querbohrung 41 und einer Anlagefläche 50 eines auf die Welle aufgeschraubten Zwischen- oder Gewinderinges 49, insbesondere zur Vorspannung, gehalten. Der Zwischenring 49 wird vor Einsetzen der entsprechenden Einsteckkappe 48 in Richtung Kegelrollenlager 44 aufgeschraubt und mittels eines ebenfalls auf der Welle 42 aufgesetzten Sicherungsblechs 51 in seiner Aufschraubposition gesichert.

Die Befestigung der Einsteckkappen 48 erfolgt über entsprechende Schrauben, die die Einsteckkappen 48 an entsprechenden Enden der Welle 42 befestigen. Dabei sind Wellenenden 69 von konisch ausgebildeten Aufsteckbohrungen 68 der Einsteckkappen aufgenommen

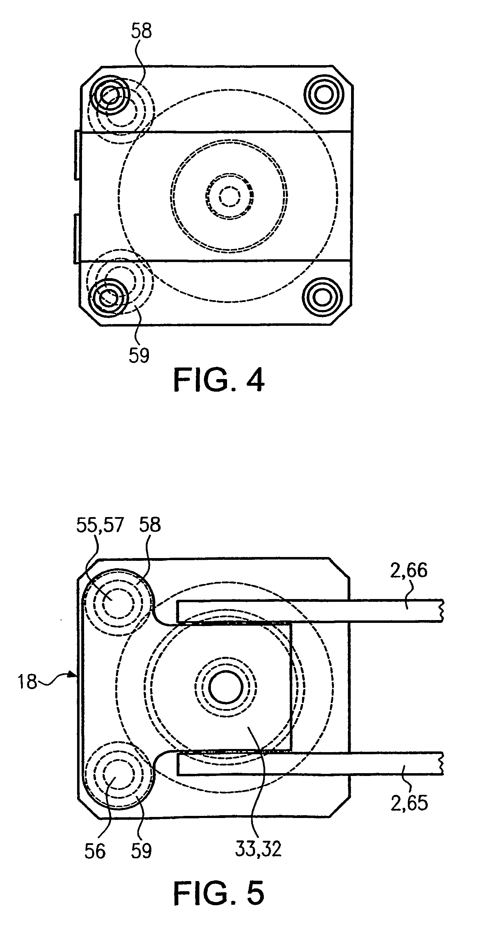

Zwischen einem am der Welle 42 wegweisenden Ende 53 der Einsteckkappen 48 gebildeten Anlageflansch 50 und Enden der Querbohrung 41 ist das jeweilige Verstellhebelende 48,49 angeordnet. Dies weist, siehe auch Figur 5, Gabelenden 65,66 auf, die beidseitig zum entsprechenden Lagerbock 32,39 angeordnet sind. Zur Fixierung der Gabelenden an der jeweiligen Einsteckkappe 48 weist diese wenigstens eine Anschraubbohrung 52 auf, durch die bis in die Gabelenden eine entsprechende Schraube einschraubbar ist.

Der Aufbau des zweiten Lagerbocks 39 ist analog. Weiterhin ist beim zweiten Lagerbock zu beachten, dass mit diesem das Ausschubende 17 der Umlaufspindel 16 mittels einer entsprechenden Schraube lösbar befestigt ist, siehe Figur 3.

Auf einer Außenseite des Antriebsgehäuses 28 sind Kühlrippen 70 angeordnet, siehe die gestrichelte Darstellung in Figur 2. Die Kühlrippen können sowohl in Längsrichtung als auch in Radialrichtung angebracht sein. Andere Anordnungen sind ebenfalls möglich.

Weiterhin ist als Teil eines Schmiermittelverteilungssystems 60 zumindest ein Schmiermittelzufuhrkanal dargestellt, über den von außen Schmiermittel sowohl dem Gewindetrieb mit Radial- und Axiallagereinrichtung sowie der durch die Lagerböcke 33 gebildeten Lagereinrichtung 32 zuführbar ist.

In den Figuren 4 und 5, die einer Draufsicht bzw. einer Unteransicht der erfindungsgemäßen Antriebsvorrichtung 1 nach Figur 1 entsprechen, sind insbesondere Führungsstangen 55 und 56 erkennbar. Diese dienen zur Aufnahme von auf die Antriebsvorrichtung 1 bei Betätigung der Schweißzange übertragenen Kipp- und Drehmomenten. Die Führungsstangen erstrecken sich parallel zur Längsrichtung 40 der Umlaufspindel 16 innerhalb des Antriebsgehäuses 18. In diesem sind entsprechende Längsbohrungen 58,59 in Verlängerung der Verstellhebelenden 8,9 bzw. Gabelenden 65,66 ausgebildet. An Enden 57 der Führungsstangen 55,56 sind diese am Antriebsgehäuse 18 befestigt.

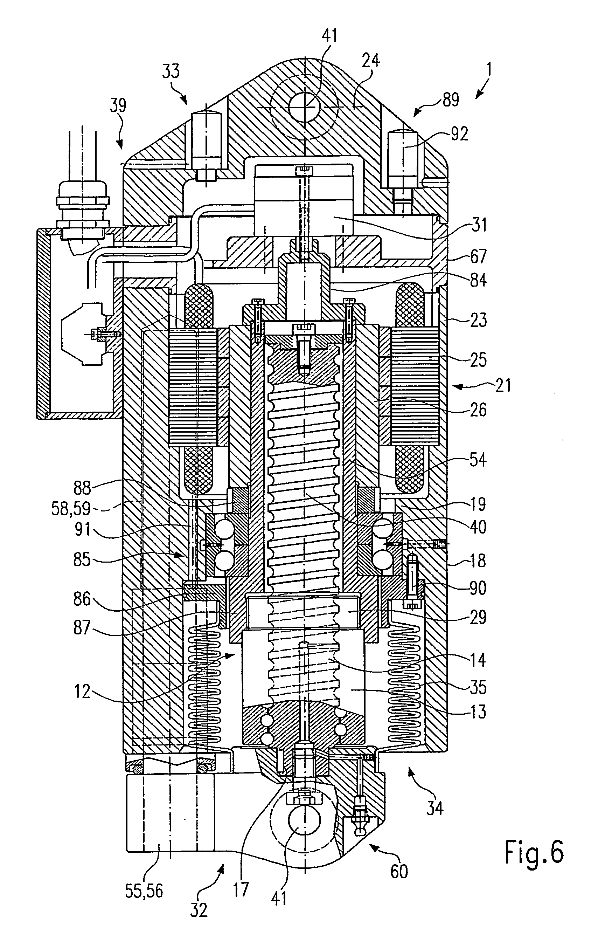

Figur 6 zeigt einen Längsschnitt durch ein zweites Ausführungsbeispiel der erfindungsgemäßen Antriebsvorrichtung nach Figur 1, wobei gleiche Bauteile wie in Figur 2, wobei auf einige Details, die die Schweißzange an sich betreffen, verzichtet wurde.

Im Folgenden werden im Wesentlichen nur die Unterschiede zwischen den beiden Ausführungsbeispielen erläutert.

In Figur 6 ist die Umlaufspindel 14 in einer Spindelhülse 54 angeordnet, die sich zwischen Rotationsmutter 13 und einer Drehkappe 84 erstreckt. Die Drehkappe ist dem Positionsgeber 31 zugeordnet, so dass dieser über die Drehung der Drehkappe auf eine entsprechende Drehstellung der Spindelhülse 54 beziehungsweise der Rotationsmutter 13 und damit der Umlaufspindel 14 bestimmt.

Die Spindelhülse 54 weist an ihrem der Rotationsmutter 13 zuweisenden Ende einen Stufenabschnitt 87 auf, der radial nach außen vorsteht. Auf einer Außenseite der Spindelhülse 54 ist im Bereich des Servomotors 21 der Rotor 26 angeordnet und zusammen mit der Spindelhülse 54 drehbar. Zur Befestigung des Rotors 26 an der Spindelhülse 54 ist ein Ringelement 91 auf einer Außenseite der Spindelhülse angeordnet, zwischen dem und einem radial nach außen vorstehenden Flansch der Drehkappe 84 der Rotor 26 drehfest gehalten ist.

Benachbart zum Rotor 26 ist ein Zwischenring 88 angeordnet. Zwischen diesem und dem radial nach außen vorstehenden Stufenabschnitt 87 ist eine Lagereinrichtung 85 zur drehbaren Lagerung der Spindelhülse 54 innerhalb des Antriebsgehäuses 18 angeordnet.

Zur weiteren Fixierung der Lagereinrichtung 85 ist noch ein Befestigungsring 86 vorgesehen, der beispielsweise mittels Schrauben 90 lösbar am Antriebsgehäuse 18 im Bereich des Stufenabschnitts 87 befestigt ist. Der Befestigungsring 86 dient gleichzeitig zur radialen und drehbaren Lagerung des Stufenabschnitts 87.

Innerhalb des Stufenabschnitts 87 ist die Rotationsmutter 13 insbesondere im Bereich ihrer Stirnseite 29 befestigt, so dass sich die Rotationsmutter 13 zusammen mit Spindelhülse 54 dreht, aber in axialer Richtung unverschieblich ist.

In Figur 6 ist noch das Schmiermittelverteilsystem 60 dargestellt, über das Schmiermittel von außen insbesondere dem Gewindetrieb 12 zugeführt werden kann.

Um den Faltenbalg 35 als Schutzeinrichtung 34 beim Ein- und Ausfahren der Umlaufspindel 14 Ent- und entsprechend Belüften zu können, ist noch eine Be-/Entlüftungseinrichtung 89 vorgesehen, die ein Inneres des Faltenbalges mit der äußeren Umgebung der Antriebsvorrichtung 1 über Leitungen 91, von denen eine dargestellt ist, sowie über Luftaustauschdämpfer 92 verbindet.

Figur 1 zeigt weiterhin eine prinzipielle Darstellung einer Schweißzange 1 mit zwei Hebeln oder Zangenschenkel 2, 3.

Bei dem dargestellten Ausführungsbeispiel der Schweißzange handelt es sich beispielhaft um eine sogenannte X-Schweißzange.

Zumindest einem Zangenschenkel 3 ist eine Arretiereinrichtung 72 in Form einer Stelleinrichtung 74 zugeordnet. Diese erstreckt sich zwischen einem Fixpunkt 71 und dem entsprechenden Zangenschenkel 3. Durch die Arretiereinrichtung 72 beziehungsweise Stelleinrichtung 74 ist eine auswählbare Arretierstellung 73 des Zangenschenkels 3 festlegbar. Dies gilt analog auch für andere Schweißzangen, wie beispielsweise eine C-Schweißzange.

Es ist natürlich möglich, eine entsprechende Arretiereinrichtung beziehungsweise Stelleinrichtung zusätzlich oder altemativ am anderen Zangenschenkel 2 in analoger Weise anzuordnen.

Die Stelleinrichtung 74 (Nebenantrieb) ist hierbei analog zur Antriebsvorrichtung 1 als Hauptantrieb aufgebaut, wobei sich beide in ihrer Leistung beziehungsweise maximalen Kraftentwicklung unterscheiden können.

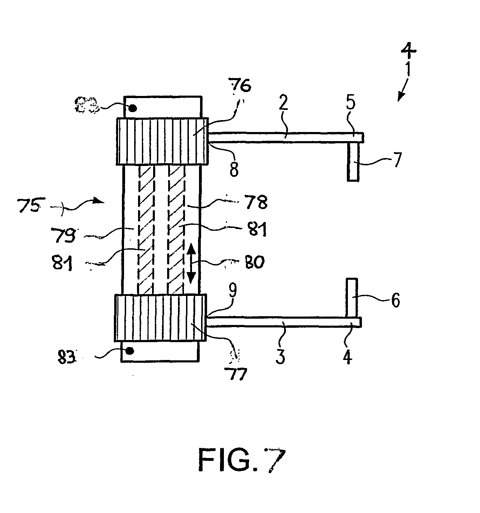

In Figur 7 ist ein weiteres Ausführungsbeispiel von Antriebsvorrichtung 10 und Arretiereinrichtung 72 beziehungsweise Stelleinrichtung 74 dargestellt. Bei diesem Ausführungsbeispiel sind Antriebsvorrichtung 10 und Stelleinrichtung 74 in einer Verstelleinrichtung 75 integriert.

Die Verstelleinrichtung 75 weist im Wesentlichen zwei Verstellelemente 76, 77auf, die durch entsprechende Gewindetriebe78, 79mit zugehörigen Drehspindeln 81 unabhängig voneinander in axialer Richtung 80 der jeweiligen Drehspindeln bewegbar sind. Die Drehung der entsprechenden Drehspindeln81 kann analog zu Figur 2 erfolgen, das heißt durch Verwendung von Rotationsmutter 13 und elektromotorischem Antrieb 21. Dabei ist jedem Gewindetrieb 78, 79eine entsprechende Rotationsmutter und ein entsprechender elektromotorischer Antrieb zugeordnet.

An jedem Verstellelement 76, 77 ist ein entsprechender Zangenschenkel 2, 3 angeordnet, wobei keine Gelenkverbindung oder andere Bewegungsverbindungen zwischen den Zangenschenkeln 2, 3 der Schweißzange 3 vorhanden ist. Das heißt, die Zangenschenkel 2, 3 sind unabhängig voneinander bewegbar.

Im Wesentlichen können die Verstellelemente 76, 77 auch in Form eines Lagerbocks 32, 39, siehe Figur 2, ausgebildet sein, wobei allerdings jedem Lagerbock eine separate Drehspindel und damit ein separater Gewindetrieb 78, 79 zugeordnet ist.

Um die Verstellung eines jeden Gewindetriebs und damit eines jeden Zangenschenkels 2, 3 überwachen und steuern zu können, sind entsprechende Positionssensoren 83, beispielsweise dem jeweiligen Verstellelement 76, 77 zugeordnet. Die Zuordnung des Positionssensors kann allerdings auch nach Figur 2 erfolgen, siehe dort Bezugszeichen 31 für den entsprechenden Positionssensor. Der Positionssensor 31 nach Figur 2 erfasst beispielsweise eine entsprechende Drehstellung von Rotorhülse 27 beziehungsweise Drehspindel 14, wobei jeder der Positionssensoren vorzugsweise als Absolutwertgeber ausgebildet ist.

Bei dem Ausführungsbeispiel nach Figur 7 ist als Alternative noch möglich, dass nur eine Drehspindel 82 und entsprechend nur ein Gewindetrieb 78, 79 vorgesehen ist. Dabei sind die Verstellelemente 76, 77 unterschiedlichen Drehspindelabschnitten zugeordnet, die in axialer Richtung 80 nebeneinander angeordnet sind. Die Drehspindelabschnitte können sich beispielsweise durch Gewindesteigung unterscheiden und weisen auf jeden Fall eine unterschiedliche Gewindegängigkeit auf, so dass bei Drehung der Drehspindel 81 in einer Drehrichtung die mit ihr bewegungsverbunden Verstellelemente 76, 77 sich in entgegengesetzte Axialrichtungen 80 verstellen.

Durch die Erfindung ist insbesondere mittels der separaten oder mit der Antriebsvorrichtung 1 integrierten Arretiereinrichtung 72 neben einem einfachen Zangenausgleich auch ein Drehmomentausgleich möglich. Letzteres führt beispielsweise dazu, dass die Schweißzange 4, siehe Figur 1, weniger im Bereich ihrer Schwenkachse durch entsprechende Drehmomente belastet wird.

Die erfindungsgemäße Antriebsvorrichtung 1 weist eine äußerst geringe Baulänge, siehe Figur 2, auf, wobei in Rückzugsstellung 15 der Umlaufspindel 16 sowohl der Gewindetrieb 12 als auch der Servomotor 21 im Wesentlichen vollständig innerhalb des Antriebsgehäuses 18 angeordnet sind. Weiter ist die Antriebsvorrichtung 1 äußerst kompakt, da die Führungsstangen 55,56 im Antriebsgehäuse 18 integriert sind. Durch die Verwendung des elektromotorischen Antriebs im Zusammenhang mit dem Gewindetrieb 12 ergibt sich eine einfache Möglichkeit zur Verstellung der Hebel der Schweißzange, wobei die Verstellung positionsgenau und genau reproduzierbar erfolgt. Sämtliche Zwischenstellungen zwischen Schweiß- und Bereitschaftsstellung, siehe Figur 1, der Hebel der Schweißzange 4 sind kontrolliert einstellbar, so dass beispielsweise die Schweißzange nach Beendigung eines Schweißvorgangs und Anfahren einer nächsten Schweißposition nur so weit wie notwendig geöffnet werden muss. Weiterhin sind durch die erfindungsgemäße Antriebsvorrichtung 1 neben den Positionen der Hebel bzw. der Schweißelektroden auch die Elektrodenkraft und entsprechende Änderungen der Elektrodenkraft messbar.

## Patentansprüche

1. Antriebsvorrichtung (1) für eine ein Paar von Zangenschenkein (2,3) aufweisende Schweißzange (4), welche Antriebsvorrichtung (1) im wesentlichen zwischen zwei den mit Schweißelektroden (5) ausgebildeten Schweißenden (6,7) gegenüberliegenden Verstellenden (8,9) der Schenkel zum Verstellen wenigstens eines Schenkels (2,3) zwischen Schweiß- und Bereitschaftsstellung (10,11) angeordnet ist und einen elektromotorisch angetriebenen Gewindetrieb (12) mit Rotationsmutter (13) und zwischen Ausschub- und Rückzugsstellung (14,15) axial verstellbarer Umlaufspindel (16) aufweist, welche mit ihrem freien Ausschubende (17) mit einem Verstellende (8,9) eines Schenkels (2,3) bewegungsverbunden ist,
**dadurch gekennzeichnet,**
**dass** die Antriebsvorrichtung (1) ein hülsenförmiges Antriebsgehäuse (18) mit wenigstens teilweise umlaufendem Halteabsatz (19) aufweist, wobei die Rotationsmutter (13) am Halteabsatz (19) drehbar, aber axial unverschieblich gelagert ist.

2. Anthebsvorrichtung nach Anspruch 1,
**dadurch gekennzeichnet,**
**dass** die Rotationsmutter (13) eine integrierte Radial- und Axiallagereinrichtung (20) aufweist.

3. Antriebsvorrichtung nach Anspruch 1 oder 2,
**dadurch gekennzeichnet,**
**dass** der Gewindetrieb als Kugelgewindetrieb (12) ausgebildet ist.

4. Antriebsvorrichtung nach einem der vorangehenden Ansprüche,
**dadurch gekennzeichnet,**
**dass** die Antriebsvorrichtung (1) zwischen Verstellenden (8, 9) von als doppelarmigen Hebeln ausgebildeten Zangenschenkein (2, 3) angeordnet ist.

5. Antriebsvorrichtung nach Anspruch 2,
**dadurch gekennzeichnet, dass** ein Lagerring (20) der Radial- und Axiallagereinrichtung mit dem Halteabsatz (19) drehfest und insbesondere lösbar verbunden ist, wobei die Rotationsmutter (13) relativ zum Lagerring (20) drehbar ist.

6. Antriebsvorrichtung nach einem der vorangehenden Ansprüche,
**dadurch gekennzeichnet,**
**dass** die Rotationsmutter (13) zur spielfreien Lagerung vorgespannt ist.

7. Antriebsvorrichtung nach einem der vorangehenden Ansprüche,
**dadurch gekennzeichnet,**
**dass** der elektromotorische Antrieb ein bürstenloser Servomotor (21) ist.

8. Antriebsvorrichtung nach einem der vorangehenden Ansprüche,
**dadurch gekennzeichnet,**
**dass** das Antriebsgehäuse (18) an seinem dem freien Ausschubende (17) der Umlaufspindel (16) gegenüberliegenden Gehäuseende (23) mit einem Deckel (24) insbesondere lösbar verschlossen ist.

9. Antriebsvorrichtung nach einem der vorangehenden Ansprüche,
**dadurch gekennzeichnet,**
**dass** der Servomotor (21) einen innerhalb des Antriebsgehäuses (18) insbesondere drehfest angeordneten Stator (25) und einen in diesem drehbar angeordneten Rotor (26) aufweist, welcher mit der Rotationsmutter (13) insbesondere kraftschlüssig bewegungsverbunden ist.

10. Antriebsvorrichtung nach Anspruch 9,
**dadurch gekennzeichnet,**
**dass** der Rotor (26) als Rotorhülse (27) ausgebildet ist, in der die Umlaufspindel (16) zumindest in ihrer Rückzugsstellung (15) teilweise eingefahren ist.

11. Antriebsvorrichtung nach Anspruch 10,
**dadurch gekennzeichnet,**
**dass** die Rotorhülse (27) an ihrem vom Deckel (24) fortweisendem ersten Ende (28) dass die Rotorhülse (27) an ihrem vom Deckel (24) fortweisendem ersten Ende (28) mit der Rotationsmutter (13) insbesondere an deren Stirnseite (29) drehfest verbunden ist.

12. Antriebsvorrichtung nach Anspruch 10 oder 11,
**dadurch gekennzeichnet,**
**dass** der Rotationsmutter (13) und/oder der Rotorhülse (27) ein Positionsgeber (31) zugeordnet ist.

13. Antriebsvorrichtung nach Anspruch 12,
**dadurch gekennzeichnet,**
**dass** der Positionsgeber ein Absolutwertgeber (31) ist.

14. Antriebsvorrichtung nach einem der Ansprüche 8 - 13,
**dadurch gekennzeichnet,**
**dass** am Ausschubende (17) der Umlaufspindel (16) ein erster Lagerbock (32) als Lagereinrichtung (33) für das Verstellhebelende (8) eines Hebels (2) insbesondere lösbar angeordnet ist.

15. Antriebsvorrichtung nach Anspruch 14,
**dadurch gekennzeichnet,**
**dass** das Ausschubende (17) im ersten Lagerbock (32) drehfest gelagert ist.

16. Antriebsvorrichtung nach Anspruch 14 oder 15,
**dadurch gekennzeichnet,**
**dass** zwischen erstem Lagerbock (32) und im Wesentlichen Halteabsatz (19) eine die Umlaufspindel (16) umgebende, längenvariable Schutzeinrichtung (34) angeordnet ist.

17. Antriebsvorrichtung nach Anspruch 16,
**dadurch gekennzeichnet,**
**dass** die Schutzeinrichtung (34) als Spiralabdeckung ausgebildet ist.

18. Antriebsvorrichtung nach Anspruch 16,
**dadurch gekennzeichnet,**
**dass** die Schutzeinrichtung (34) als Faltenbalg (35) ausgebildet ist.

19. Antriebsvorrichtung nach einem der vorangehenden Ansprüche,
**dadurch gekennzeichnet,**
**dass** der Deckel (24) einen zweiten Lagerbock (39) als Lagereinrichtung (33) zur Lagerung des Verstellhebelendes (9) des weiteren Hebels (3) aufweist.

20. Antriebsvorrichtung nach einem der vorangehenden Ansprüche 14 - 19,
**dadurch gekennzeichnet,**
**dass** jeder Lagerbock (32,39) eine sich im Wesentlichen senkrecht zur Längsachse (40) der Umlaufspindel (16) verlaufende Querbohrung (41) aufweist, in der eine mit dem Verstellhebelende (8,9) insbesondere lösbar verbundene Welle (42) verdrehbar gelagert ist.

21. Antriebsvorrichtung nach Anspruch 20,
**dadurch gekennzeichnet,**
**dass** auf der Welle (42) zumindest zwei Kegelrollenlager (43,44) in spiegelbildlicher Anordnung aufgesetzt sind.

22. Antriebsvorrichtung nach Anspruch 21,
**dadurch gekennzeichnet,**
**dass** jedes Kegelrollenlager (43,44) seitlich zur spielfreien Lagerung vorgespannt ist.

23. Antriebsvorrichtung nach einem der Ansprüche 20 - 22,
**dadurch gekennzeichnet,**
**dass** innerhalb der Querbohrung (41) und/oder an der Welle (42) gegenüberliegende Anlageabsätze (45, 46, 47) für die Kegelrollenlager (43, 44) angeordnet sind.

24. Antriebsvorrichtung nach einem der Ansprüche 20 - 23,
**dadurch gekennzeichnet,**
**dass** beidseitig zur Querbohrung (41) an der Welle (42) lösbar befestigte insbesondere konische Aufsteckbohrungen (68) aufweisende Einsteckkappen (48) angeordnet sind.

25. Antriebsvorrichtung nach Anspruch 24,
**dadurch gekennzeichnet,**
**dass** jede Einsteckkappe (48) in ihrer Aufsteckbohrung (68) ein Wellenende (69) aufnimmt und mit diesem insbesondere durch Verschrauben lösbar verbunden ist.

26. Antriebsvorrichtung nach einem der Ansprüche 20 - 25,
**dadurch gekennzeichnet,**
**dass** wenigstens ein auf die Welle (42) aufschraubbarer Zwischenring (49) als seitliche, verstellbare Anlagefläche (50) für ein Kegelrollenlager (44) vorhanden ist.

27. Antriebsvorrichtung nach Anspruch 26,
**dadurch gekennzeichnet,**
**dass** zwischen Einsteckkappe (48) und Zwischenring (49) ein Sicherungsblech (51) angeordnet ist.

28. Antriebsvorrichtung nach einem der vorangehenden Ansprüche,
**dadurch gekennzeichnet,**
**dass** außen am Antriebsgehäuse (8) Kühlrippen (70) angeordnet sind.

29. Antriebsvorrichtung nach einem der vorangehenden Ansprüche,
**dadurch gekennzeichnet,**
**dass** wenigstens zwei Führungsstangen (55,56) im Wesentlichen parallel zur Längsachse (40) der Umlaufspindel (16) angeordnet sind, welche zumindest an ihren Enden (57) mit dem Antriebsgehäuse (18) und/oder der Lagereinrichtung (33, 32) befestigt sind.

30. Antriebsvorrichtung nach Anspruch 29,
**dadurch gekennzeichnet,**
**dass** jede Führungsstange (55,56) in einer Längsbohrung (58,59) innerhalb des Antriebsgehäuses (18) geführt ist.

31. Antriebsvorrichtung nach Anspruch 30,
**dadurch gekennzeichnet,**
**dass** jede Längsbohrung (58,59) im Wesentlichen in Verlängerung des Verstellhebelendes (8,9) angeordnet ist.

32. Antriebsvorrichtung nach einem der vorangehenden Ansprüche,
**dadurch gekennzeichnet,**
**dass** ein Schmiermittelverteilungssystem (60) mit wenigstens einem Schmiermittelzuführkanal innerhalb des Antriebsgehäuses (18) und/oder innerhalb der Lagereinrichtung (33) integriert ist.

33. Antriebsvorrichtung nach einem der vorangehenden Ansprüche,
**dadurch gekennzeichnet,**
**dass** die Umlaufspindel (16) in einer Spindelhülse (54) angeordnet ist, welche mit der Rotationsmutter (13) drehverbunden ist.

34. Antriebsvorrichtung nach Anspruch 33,
**dadurch gekennzeichnet,**
**dass** der Rotor (26) außen auf der Spindelhülse (54) angeordnet ist.

35. Antriebsvorrichtung nach Anspruch 33 oder 34,
**dadurch gekennzeichnet,**
**dass** eine Drehkappe (84) an dem der Rotationsmutter (13) gegenüberliegenden Ende der Spindelhülse (54) insbesondere lösbar befestigt ist.

36. Antriebsvorrichtung nach einem der Ansprüche 33 - 35,
**dadurch gekennzeichnet,**
**dass** eine Lagereinrichtung (85) zwischen Spindelhülse (54) und Antriebsgehäuse (18) angeordnet ist.

37. Antriebsvorrichtung nach Anspruch 36,
**dadurch gekennzeichnet,**
**dass** die Lagereinrichtung (85) zwischen einem radial nach außen vorstehenden Stufenabschnitt (87) der Spindelhülse (54) und einem Zwischenring (88) angeordnet ist.

38. Antriebsvorrichtung nach Anspruch 37,
**dadurch gekennzeichnet,**
**dass** dem Stufenabschnitt (87) der Spindelhülse (54) ein Befestigungsring (86) zugeordnet ist.

39. Antriebsvorrichtung nach einem der Ansprüche 16 - 38,
**dadurch gekennzeichnet,**
**dass** eine Be-/Entlüftungseinrichtung (89) der Schutzeinrichtung (34) zugeordnet ist.

40. Schweißzange (4) mit wenigstens zwei relativ zueinander bewegbaren und an ihren Schweißenden (6, 7) mit Elektroden (5) versehenen Zangenschenkeln und einer den Schweißenden (6, 7) gegenüberliegenden Verstellende (8, 9) der Zangenschenkelzugang zugeordneten Antriebsvorrichtung (1) nach einem der vorangehenden Ansprüche, wobei zwischen wenigstens einem Zangenschenkel und einem Fixpunkt (71) eine lösbare Arretiereinrichtung (72) zur Festlegung zumindest einer Arretierstellung (73) des Zangenschenkels angeordnet ist,
**dadurch gekennzeichnet,**
**dass** die Arretiereinrichtung (72) eine elektrisch betriebene Stelleinrichtung (74) zur variablen Einstellung der Arretierstellung (73) ist.

41. Schweißzange nach Anspruch 40,
**dadurch gekennzeichnet,**
**dass** die Stelleinrichtung (74) eine Antriebsvonichtung nach wenigstens einem der vorangehenden Ansprüche 1 bis 39 ist.

42. Schweißzange nach Anspruch 40 oder 41,
**dadurch gekennzeichnet,**
**dass** durch die Stelleinrichtung (74) insbesondere vor und/oder nach einer Schweißung mittels Elektrode und Gegenelektrode (6, 7) ein Zangenausgleich durchführbar ist.

43. Schweißzange nach einem der vorangehenden Ansprüche 40 bis 42,
**dadurch gekennzeichnet,**
**dass** Antriebsvorrichtung (10) und Stelleinrichtung (74) in einer elektrisch betätigbaren Verstelleinrichtung (75) integriert sind, welche zwei insbesondere unabhängig voneinander bewegbare Verstellelemente (76, 77) aufweist, von denen jeweils ein Verstellelement mit einem Verstellende (8, 9) eines Zangenschenkels (2, 3) bewegungsverbunden ist.

44. Schweißzange nach Anspruch 43,
**dadurch gekennzeichnet,**
**dass** die Verstelleinrichtung (75) zwei Gewindetriebe (78, 79) aufweist, wobei durch jeden dieser Gewindetriebe ein entsprechendes Verstellelement (76, 77) in axialer Richtung (80) einer Drehspindel (81) des jeweiligen Gewindetriebs bewegbar ist.

45. Schweißzange nach einem der vorangehenden Ansprüche 40 bis 44,
**dadurch gekennzeichnet,**
**dass** jeder Zangenschenkel (2, 3) ohne gelenkige Verbindung der Zangenschenkel miteinander von jeweils einem Verstellelement (76, 77) bewegbar und in auswählbarer Arretierstellung fixierbar ist.

46. Schweißzange nach Anspruch 44,
**dadurch gekennzeichnet,**
**dass** die Gewindetriebe der Verstelleinrichtung (75) gleichartig aufgebaut sind.

47. Schweißzange nach einem der Ansprüche 43 bis 46,
**dadurch gekennzeichnet,**
**dass** die Verstelleinrichtung (75) eine Drehspindel (81) mit wenigstens zwei unterschiedlichen Drehspindelabschnitten aufweist, wobei jedem Drehspindelabschnitt ein Verstellelement (76, 77) zugeordnet ist.

48. Schweißzange nach Anspruch 47,
**dadurch gekennzeichnet,**
**dass** jedem Verstellelement (76, 77) ein Positionssensor (83) zugeordnet ist.

49. Schweißzange nach einem der vorangehenden Ansprüche 40 bis 48,
**dadurch gekennzeichnet,**
**dass** die Stelleinrichtung (44) ein elektrischer Linerantrieb ist.

50. Schweißzange nach einem der vorangehenden Ansprüche 40 bis 49,
**dadurch gekennzeichnet,**
**dass** die Lagereinrichtung (33) zumindest zwischen einem Ende der Antriebsvorrichtung (1) oder Stelleinrichtung (74) und einem diesem Ende zugeordneten Verstellende (8, 9) wenigstens eines Schenkels (2, 3) der Schweißzange (4) angeordnet ist.

## Claims

1. Drive device (1) for welding tongs (4) comprising a pair of limbs (2, 3), said drive device (1) being arranged substantially between two adjusting ends (8, 9) of the limbs opposing the welding ends (6, 7) provided with the welding electrodes (5) for adjusting at least one limb (2, 3) between the welding and the standby position (10, 11), and comprises an electric motor-driven screw thread drive (12) with a rotating nut (13) and a spindle (16) axiaiiy displaceable between the extended and the return position (14, 15), said spindle being movingly connected with its free extended end (17) to an adjusting end (8, 9) of a limb (2, 3), **characterized in that**
the drive device (1) comprises a sleeve-shaped drive housing (18) with a holding shoulder (19) revolving at least partially, wherein the rotating nut (13) is supported on the holding shoulder (19) in a rotatable but axially immovable manner.

2. Drive device as claimed in claim 1,
**characterized in that** the rotating nut (13) comprises an integrated radial and axial bearing means (20).

3. Drive device as claimed in claim 1 or 2,
**characterized in that** the screw thread drive is formed as a ball drive (12).

4. Drive device as claimed in one of the preceding claims,
**characterized in that** the drive device (1) is arranged between adjusting ends (8, 9) of limbs (2, 3) formed as double-armed levers.

5. Drive device as claimed in claim 2, **characterized in that** a bearing ring (20) of the radial and axial bearing means is fixed for co-rotation and particularly detachable with the holding shoulder (19), wherein the rotating nut (13) is rotatable relative to the bearing ring (20).

6. Drive device as claimed in one of the preceding claims, **characterized in that** the rotating nut (13) is pre-loaded for a bearing free from backlash.

7. Drive device as claimed in one of the preceding claims, **characterized in that** the electric motor-driven drive is particularly a brushless servo motor (21).

8. Drive device as claimed in one of the preceding claims, **characterized in that** the drive housing (18) is particularly releasably locked by a cover (24) at its housing end (23) opposing the free extended end (17) of the spindle (16).

9. Drive device as claimed in one of the preceding claims, **characterized in that** the servo motor (21) comprises a stator arranged within the drive housing (18) particularly in a manner fixed for co-rotation, and a rotor (26) rotatably arranged therein, which is movingly connected to the rotating nut (13) particularly in a non-positive way.

10. Drive device as claimed in claim 9, **characterized in that** the rotor (26) is formed as a rotor sleeve (27) in which the spindle (16) is partially retracted at least in its return position (15).

11. Drive device as claimed in claim 10, **characterized in that** the rotor sleeve (27) is fixed for co-rotation with the rotating nut (13) particularly on its front side (29) at the first end (28) of the rotation sleeve pointing away from the cover (24).

12. Drive device as claimed in claim 10 or 11, **characterized in that** a position transmitter (31) is associated to the rotating nut (13) and/or the rotor sleeve (27).

13. Drive device as claimed in claim 12, **characterized in that** the position transmitter is an absolute value transmitter (31).

14. Drive device as claimed in one of claims 8 to 13, **characterized in that** a first bearing block (32) as a bearing means (33) for the adjusting lever end (8) of a lever (2) is particularly releasably arranged at the extended end (17) of the spindle (16).

15. Drive device as claimed in claim 14, **characterized in that** the extended end (17) is fixed for co-rotation in the first bearing block (32).

16. Drive device as claimed in claim 14 or 15, **characterized in that** a protection means (34) variable in length surrounding the spindle (16) is arranged between the bearing block (32) and substantially the holding shoulder (19).

17. Drive device as claimed in claim 16, **characterized in that** the protective means (34) is formed as a helical cover.

18. Drive device as claimed in claim 16, **characterized in that** the protective means (34) is formed as a bellows (35).

19. Drive device as claimed in one of the preceding claims, **characterized in that** the cover (24) comprises a second bearing block (39) as a bearing means for supporting the adjustment lever end (9) of the further lever (3).

20. Drive device as claimed in one of the preceding claims 14 to 19, **characterized in that** each bearing block (32, 39) comprises a transverse bore (41) extending substantially perpendicular to the longitudinal axis (40) of the spindle (16), in which said transverse bore a shaft (42) particularly detachably connected to the adjustment lever end is rotatably supported.

21. Drive means as claimed in claim 20, **characterized in that** at least two taper roller bearings (43, 44) are set onto the shaft (42) in a laterally reversed arrangement.

22. Drive device as claimed in claim 21, **characterized in that** each tapered roller bearing (43, 44) is laterally loaded for a support free from backlash.

23. Drive device as claimed in one of claims 20 to 22, **characterized in that** opposing abutment shoulders (45, 346, 47) for the taper roller bearings are arranged within the transverse bore (41) and/or on the shaft (42).

24. Drive device as claimed in one of claims 20 to 23, **characterized in that** insertion caps (48) are arranged on both sides of the transverse bore (41) at the shaft (42) said insertion caps being detachably attached and particularly comprising conical attachment bores (68).

25. Drive device as claimed in claim 24, **characterized in that** each insertion cap (48) receives a shaft end (69) in its attachment bore (68) and is detachably connected with this shaft end particularly be screwing.

26. Drive device as claimed in one of claims 20 to 25, **characterized in that** at least one intermediate ring (49) that can be screwed onto the shaft exists as a lateral, adjustable abutment surface (50) for a taper roller bearing (44).

27. Drive device as claimed in claim 26, **characterized in that** a safety sheet (51) is arranged between the insertion cap (48) and the intermediate ring (49).

28. Drive device as claimed in one of the preceding claims, **characterized in that** cooling ribs (70) are arranged on the outside of the drive housing (8).

29. Drive device as claimed in one of the preceding claims, **characterized in that** at least two guide rods (55, 56) are arranged substantially parallel to the longitudinal axis (40) of the spindle (16), which are attached at least at their ends (57) with the drive housing (18) and/or the bearing means (33, 32).

30. Drive device as claimed in claim 29, **characterized in that** each guide rod (55, 56) is guided in a longitudinal bore (58, 59) within the drive housing (18).

31. Drive device as claimed in claim 30, **characterized in that** each longitudinal bore (58, 59) is arranged substantially in extension of the adjusting lever end (8. 9).

32. Drive device as claimed in one of the preceding claims, **characterized in that** a lubricant distributing system (60) with at least one lubricant supply channel is integrated within the drive housing (18) and/or within the bearing means (33).

33. Drive device as claimed in one of the preceding claims, **characterized in that** the spindle (16) is arranged in a spindle sleeve (54) which is rotatably connected to the rotating nut (13).

34. Drive means as claimed in claim 33, **characterized in that** the rotor (26) is arranged on the outside of the spindle sleeve (54).

35. Drive device as claimed in claim 33 or 34, **characterized in that** a rotary cap (84) is particularly releasably attached at the end of the spindle sleeve (54) opposing the rotating nut (13).

36. Drive device as claimed in one of claims 33 to 35, **characterized in that** a bearing means (85) is arranged between the spindle sleeve (54) and the drive housing (18).

37. Drive device as claimed in claim 36, **characterized in that** the bearing means (85) is arranged between the radially outwardly projecting step section (87) of the spindle sleeve (54) and an intermediate ring (88).

38. Drive device as claimed in claim 37, **characterized in that** an attachment ring (86) is associated to the step section (7) of the spindle sleeve (54).

39. Drive device as claimed in one of claims 16 to 38, **characterized in that** a ventilation means (89) is associated to the protective means (34).

40. Welding tongs (4) comprising at least two limbs, said limbs being movable relative with respect to each other and being provided with electrodes (5) on their welding ends (6, 7), and comprising a drive means (1) associated to the adjusting ends 88, 9) of the limbs opposing the welding ends (6, 7), wherein a releasable fixing means (72) for defining at least one fixing position (73) of the limb is arranged between at least one limb and a fixed point (71), **characterized in that** the fixing means (72) is an electrically operated actuator means (74) for the variable adjustment of the fixing position (73).

41. Welding tongs as claimed in claim 40, **characterized in that** the actuator means (74) is a drive device at least according to one of the preceding claims 1 to 39.

42. Welding tongs as claimed in claim 40 or 41, **characterized in that** a tongs compensation can be implemented by the actuator position (74) particularly before and/or after a welding process by means of an electrode and counter electrode (6, 7).

43. Welding tongs as claimed in one of the preceding claims 40 to 42, **characterized in that** the drive device (10) and the actuator means (74) are integrated in an electrically operable adjusting means (75), which comprises two adjusting elements (76, 77) movable independent of each other, one adjusting element of which being movingly connected to an adjusting end (8, 9) of a limb (2, 3).

44. Welding tongs as claimed in claim 43, **characterized in that** the adjusting means (75) has two screw thread drives (78, 79) wherein a respective adjusting element (76, 77) is movable in the axial direction (80) of a spindle (81) of the respective screw thread drive by each of these screw thread drives.

45. Welding tongs as claimed in one of the preceding claims 40 to 44, **characterized in that** each limb (2, 3) without a flexible connection of the limbs with one another is movable by one adjusting element (76, 77) each and can be fixed in a selectable fixing position.

46. Welding tongs as claimed in claim 44, **characterized in that** the screw thread drives of the adjusting means (75) are structured similarly.

47. Welding tongs as claimed in one of the preceding claims 43 to 46, **characterized in that** the adjusting means (75) comprises a spindle (81) with at least two different spindle sections, wherein an adjusting element (76, 77) is associated to each spindle section.

48. Welding tongs as claimed in claim 47, **characterized in that** a position sensor (83) is associated to each adjusting element (76, 77).

49. Welding tongs as claimed in one of the preceding claims 40 to 48, **characterized in that** the actuator means (44) is an electric linear drive.

50. Welding tongs as claimed in one of the preceding claims 40 to 49, **characterized in that** the bearing means (33) is arranged at least between an end of the drive device (1) or actuator means (74) and an adjustment end (8, 9) associated to this end of at least one limb (2, 3) of the welding tongs.

## Revendications

1. Dispositif d'entraînement (1) pour une pince à souder (4) présentant une paire de branches de pince (2, 3), lequel dispositif d'entraînement (1) est disposé essentiellement entre deux extrémités de réglage (8, 9), faisant face aux extrémités de soudage (6, 7) réalisées avec des électrodes de soudage (5), des branches pour le réglage d'au moins une branche (2, 3) entre la position de soudage et la position en attente (10, 11) et présente un pignon fileté (12) entraîné par un moteur électrique avec écrou de rotation (13) et une broche rotative (16) pouvant être déplacée axialement entre la position d'extraction et la position de recul (14, 15), laquelle broche est reliée en déplacement par son extrémité d'extraction (17) libre à une extrémité de réglage (8, 9) d'une branche (2, 3),
**caractérisé en ce que**
le dispositif d'entraînement (1) présente un boîtier d'entraînement (18) en forme de manchon avec un décrochement de retenue (19) tournant au moins partiellement, l'écrou de rotation (13) étant logé sur le décrochement de retenue (19) de façon rotative, mais non coulissant dans le sens axial.

2. Dispositif d'entraînement selon la revendication 1,
**caractérisé en ce que**
l'écrou de rotation (13) présente un dispositif de palier radial et de palier axial (20) intégré.

3. Dispositif d'entraînement selon la revendication 1 ou 2,
**caractérisé en ce que**
le pignon fileté est conçu comme un pignon fileté à billes (12).

4. Dispositif d'entraînement selon l'une quelconque des revendications précédentes,
**caractérisé en ce que**
le dispositif d'entraînement (1) est disposé entre des extrémités de réglage (8, 9) de branches de pince (2, 3) conçues comme des leviers à double bras.

5. Dispositif d'entraînement selon la revendication 2,
**caractérisé en ce que**
une bague de palier (20) du dispositif de palier radial et de palier axial est relié au décrochement de retenue (19) de façon solidaire en rotation et en particulier de façon amovible, l'écrou de rotation (13) étant rotatif par rapport à la bague de palier (20).

6. Dispositif d'entraînement selon l'une quelconque des revendications précédentes, **caractérisé en ce que**
l'écrou de rotation (13) est pré-tendu pour le logement sans jeu.

7. Dispositif d'entraînement selon l'une quelconque des revendications précédentes, **caractérisé en ce que**
l'entraînement par moteur électrique est un servomoteur (21) sans brosse.

8. Dispositif d'entraînement selon l'une quelconque des revendications précédentes, **caractérisé en ce que**
le boîtier d'entraînement (18) est fermé en particulier de façon amovible avec un couvercle (24) sur son extrémité de boîtier (23) située vis-à-vis de l'extrémité d'extraction (17) libre de la broche rotative (16).

9. Dispositif d'entraînement selon l'une quelconque des revendications précédentes, **caractérisé en ce que**
le servomoteur (21) présente un stator (25) disposé en particulier de façon solidaire en rotation à l'intérieur du boîtier d'entraînement (18) et un rotor (26) disposé de façon rotative, lequel est relié en déplacement en particulier par adhérence des forces à l'écrou de rotation (13).

10. Dispositif d'entraînement selon la revendication 9,
**caractérisé en ce que**
le rotor (26) est conçu comme une douille de rotor (27), dans laquelle la broche rotative (16) est rentrée partiellement au moins dans sa position de recul (15).

11. Dispositif d'entraînement selon la revendication 10,
**caractérisé en ce que**
la douille de rotor (27) est reliée de façon solidaire en rotation sur sa première extrémité (28) partant du couvercle (24) à l'écrou de rotation (13), en particulier sur son côté avant (29).

12. Dispositif d'entraînement selon la revendication 10 ou 11,
**caractérisé en ce que**
un capteur de position (31) est attribué à l'écrou de rotation (13) et/ou à la douille de rotor (27).

13. Dispositif d'entraînement selon la revendication 12,
**caractérisé en ce que**
le capteur de position est un capteur de valeur absolue (31).

14. Dispositif d'entraînement selon l'une quelconque des revendications 8 à 13,
**caractérisé en ce que**
un premier support de palier (32) en tant que dispositif de palier (33) pour l'extrémité du levier de réglage (8) d'un levier (2) est disposé en particulier de façon amovible sur l'extrémité d'extraction (17) de la broche rotative (16).

15. Dispositif d'entraînement selon la revendication 14,
**caractérisé en ce que**
l'extrémité d'extraction (17) est logée de façon solidaire en rotation dans le premier support de palier (32).

16. Dispositif d'entraînement selon la revendication 14 ou 15,
**caractérisé en ce que**
entre le premier support de palier (32) et principalement le décrochement de retenue (19) est disposé un dispositif de protection (34) entourant la broche rotative (16) et variable en longueur.

17. Dispositif d'entraînement selon la revendication 16,
**caractérisé en ce que**
le dispositif de protection (34) est conçu comme un revêtement en spirale.

18. Dispositif d'entraînement selon la revendication 16,
**caractérisé en ce que**
le dispositif de protection (34) est conçu comme un soufflet (35).

19. Dispositif d'entraînement selon l'une quelconque des revendications précédentes,
**caractérisé en ce que**
le couvercle (24) présente un second support de palier (39) comme dispositif de palier (33) pour le logement de l'extrémité de levier de réglage (9) de l'autre levier (3).

20. Dispositif d'entraînement selon l'une quelconque des revendications précédentes 14 à 19,
**caractérisé en ce que**
chaque support de palier (32, 39) présente un alésage transversal (41) s'étendant sensiblement perpendiculairement à l'axe longitudinal (40) de la broche rotative (16), alésage dans lequel un arbre (42) en particulier relié de façon amovible à l'extrémité du levier de réglage (8, 9) est logé de façon rotative.

21. Dispositif d'entraînement selon la revendication 20,
**caractérisé en ce que**
au moins deux roulements à galets coniques (43, 44) sont posés sur l'arbre (42) dans un agencement symétrique.

22. Dispositif d'entraînement selon la revendication 21,
**caractérisé en ce que**
chaque roulement à galets coniques (43, 44) est pré-tendu latéralement par rapport au logement sans jeu.

23. Dispositif d'entraînement selon l'une quelconque des revendications 20 à 22,
**caractérisé en ce que**
à l'intérieur de l'alésage transversal (41) et/ou sur l'arbre (42) sont disposés des décrochements d'appui (45, 46, 47) se faisant face pour les roulements à galets coniques (43, 44).

24. Dispositif d'entraînement selon l'une quelconque des revendications 20 à 23,
**caractérisé en ce que**
des capuchons d'emboîtement (48) présentant des alésages d'emboîtement (68) fixés de façon amovible sur l'arbre (42), en particulier coniques, sont disposés des deux côtés de l'alésage transversal (41).

25. Dispositif d'entraînement selon la revendication 24,
**caractérisé en ce que**,
chaque capuchon d'emboîtement (48) reçoit une extrémité d'arbre (69) dans son alésage d'emboîtement (68) et est relié de façon amovible, en particulier par vissage, à cette extrémité.

26. Dispositif d'entraînement selon l'une quelconque des revendications 20 à 25,
**caractérisé en ce que**
au moins une bague intermédiaire (49) pouvant être vissée l'arbre (42) est présente en tant que surface d'appui (50) latérale et réglable pour un roulement à galets coniques (44).

27. Dispositif d'entraînement selon la revendication 26,
**caractérisé en ce que**
une tôle de blocage (51) est disposée entre le capuchon d'emboîtement (48) et la bague intermédiaire (49).

28. Dispositif d'entraînement selon l'une quelconque des revendications précédentes,
**caractérisé en ce que**
des nervures de refroidissement (70) sont disposées à l'extérieur sur le boîtier d'entraînement (8).

29. Dispositif d'entraînement selon l'une quelconque des revendications précédentes,
**caractérisé en ce que**
au moins deux tiges de guidage (55, 56) sont disposées sensiblement parallèlement à l'axe longitudinal (40) de la broche rotative (16), lesquelles sont fixées au moins sur leurs extrémités (57) avec le carter d'entraînement (18) et/ou le dispositif de palier (33, 32).

30. Dispositif d'entraînement selon la revendication 29,
**caractérisé en ce que**
chaque tige de guidage (55, 56) est guidée dans un alésage longitudinal (58, 59) à l'intérieur du carter d'entraînement (18).

31. Dispositif d'entraînement selon la revendication 30,
**caractérisé en ce que**
chaque alésage longitudinal (58, 59) est disposé sensiblement dans le prolongement de l'extrémité du levier de réglage (8, 9).

32. Dispositif d'entraînement selon l'une quelconque des revendications précédentes,
**caractérisé en ce que**
un système de répartition de lubrifiant (60) est intégré avec au moins un canal d'alimentation en lubrifiant à l'intérieur du boîtier d'entraînement (18) et/ou à l'intérieur du dispositif de palier (33).

33. Dispositif d'entraînemént selon l'une quelconque des revendications précédentes,
**caractérisé en ce que**
la broche rotative (16) est disposée dans une douille de broche (54) qui est reliée par rotation à l'écrou de rotation (13).

34. Dispositif d'entraînement selon la revendication 33,
**caractérisé en ce que**
le rotor (26) est disposé à l'extérieur sur la douille de broche (54).

35. Dispositif d'entraînement selon la revendication 33 ou 34,
**caractérisé en ce que**
un capuchon rotatif (84) est fixé, en particulier de façon amovible, sur l'extrémité, faisant face à l'écrou de rotation (13) de la douille de broche (54).

36. Dispositif d'entraînement selon l'une quelconque des revendications 33 à 35,
**caractérisé en ce que**
un dispositif de palier (85) est disposé entre la douille de broche (54) et le boîtier d'entraînement (18).

37. Dispositif d'entraînement selon la revendication 36,
**caractérisé en ce que**
le dispositif de palier (85) est disposé entre une partie en gradins (87) dépassant radialement vers l'extérieur de la douille de broche (54) et une bague intermédiaire (88).

38. Dispositif d'entraînement selon la revendication 37,
**caractérisé en ce que**
une bague de fixation (86) est attribuée à la partie en gradins (87) de la douille de broche (54).

39. Dispositif d'entraînement selon l'une quelconque des revendications 16 à 38,
**caractérisé en ce que**
un dispositif de ventilation/aération (89) est attribué au dispositif de protection (34).

40. Pince à souder (4) comprenant au moins deux branches de pince pouvant être déplacées l'une par rapport à l'autre et pourvues d'électrodes (5) sur ses extrémités de soudage (6, 7) et un dispositif d'entraînement (1) attribué à une extrémité de réglage, (8, 9) faisant face aux extrémités de soudage (6, 7), de l'accès de branches de pince selon l'une quelconque des revendications précédentes, un dispositif d'arrêt (72) amovible pour le blocage d'au moins une position d'arrêt (73) de la branche de pince étant disposé entre au moins une branche de pince et un point fixe (71),
**caractérisé en ce que**
le dispositif d'arrêt (72) est un dispositif de positionnement (74) exploité électriquement pour le réglage variable de la position d'arrêt (73).

41. Pince à souder selon la revendication 40,
**caractérisé en ce que**
le dispositif de positionnement (74) est un dispositif d'entraînement selon au moins l'une quelconque des revendications 1 à 39 précédentes.

42. Pince à souder selon la revendication 40 ou 41,
**caractérisé en ce que**
un équilibrage de pince peut être effectué par le dispositif de positionnement (74) en particulier avant et/ou après un soudage au moyen de l'électrode et de la contre-électrode (6, 7).

43. Pince à souder selon l'une quelconque des revendications 40 à 42 précédentes,
**caractérisé en ce que**
le dispositif d'entraînement (10) et le système de positionnement (74) sont intégrés dans un dispositif de réglage (75) pouvant être actionné électriquement, lequel présente deux éléments de réglage (76, 77) pouvant être déplacés indépendamment l'un de l'autre, dont respectivement un élément de réglage est relié par déplacement à une extrémité de réglage (8, 9) d'une branche de pince (2, 3).

44. Pince à souder selon la revendication 43,
**caractérisé en ce que**
le dispositif de réglage (75) présente deux pignons filetés (78, 79), un élément de réglage (76, 77) approprié pouvant être déplacé par chacun des ces pignons filetés dans la direction axiale (80) d'une broche de rotation (81) du pignon fileté concerné.

45. Pince à souder selon l'une quelconque des revendications précédentes 40 à 44,
**caractérisé en ce que**
chaque branche de pince (2, 3) peut être déplacée par respectivement un élément de réglage (76, 77) sans liaison articulée des branches de pince l'une avec l'autre et peut être fixée dans une position d'arrêt pouvant être choisie.

46. Pince à souder selon la revendication 44,
**caractérisé en ce que**
les pignons filetés du dispositif de réglage (75) sont conçus de la même façon.

47. Pince à souder selon l'une quelconque des revendications 43 à 46,
**caractérisé en ce que**
le dispositif de réglage (75) présente une broche rotative (81) avec au moins deux parties de broche rotative différentes, un élément de réglage (76, 77) étant attribué à chaque partie de broche rotative.

48. Pince à souder selon la revendication 47,
**caractérisé en ce que**
un capteur de position (83) est attribué à chaque élément de réglage (76, 77).

49. Pince à souder selon l'une quelconque des revendications 40 à 48 précédentes,
**caractérisé en ce que**
le système de positionnement (44) est un entraînement linéaire électrique.

50. Pince à souder selon l'une quelconque des revendications précédentes 40 à 49,
**caractérisé en ce que**
le dispositif de palier (33) est disposé au moins entre une extrémité du dispositif d'entraînement (1) ou du dispositif de positionnement (74) et un élément de réglage (8, 9), attribué à cette extrémité, d'au moins une branche (2, 3) de la pince à souder (4).
